# EUROPÄISCHE PATENTSCHRIFT

(11) **EP 3 440 350 B1**
(45) Veröffentlichungstag und Bekanntmachung des Hinweises auf die Patenterteilung: **05.08.2020**
(21) Anmeldenummer: 17715132.1
(22) Anmeldetag: 03.04.2017
(51) Int. Cl.: F03D 13/20, E04H 12/12, E04B 1/21

(54) **WINDENERGIEANLAGEN-TURMABSCHNITT MIT VERBINDUNGSKÖRPER UND VERFAHREN ZUM VERBINDEN VON TEILRINGSEGMENTEN**
WIND TURBINE TOWER SEGMENT COMPRISING A CONNECTING ELEMENT AND METHOD FOR CONNECTING PARTIAL RING SEGMENTS
SEGMENT DE TOUR D'ÉOLIENNE AVEC CORPS DE LIAISON ET PROCÉDÉ DE LIAISON DE SEGMENTS ANNULAIRES PARTIELS

(30) Priorität: 08.04.2016 DE 102016106526
(43) Veröffentlichungstag der Anmeldung: 13.02.2019
(73) Patentinhaber: Wobben Properties GmbH, 26607 Aurich (DE)
(72) Erfinder: KERSTEN, Roy, 39291 Hohenwarthe (DE)
(74) Vertreter: Eisenführ Speiser
(86) Internationale Anmeldenummer: PCT/EP2017/057805
(87) Internationale Veröffentlichungsnummer: WO 2017/174480

(56) Entgegenhaltungen:
- DE-A1- 2 116 538
- DE-A1- 10 247 388
- DE-U1- 7 730 563
- JP-A- H03 206 222
- US-A1- 2013 025 229

## Beschreibung

Die Erfindung betrifft einen Windenergieanlagen-Turmabschnitt und einen Windenergieanlagen-Turm. Darüber hinaus betrifft die Erfindung eine Windenenergieanlage sowie ein Verfahren zum Verbinden von Teilringsegmenten.

Eine Windenergieanlage umfasst im Wesentlichen einen Rotor, umfassend mindestens ein Rotorblatt, der sich durch einen Luftstrom rotatorisch bewegt und somit durch einen Läufer einen Generator antreibt, wobei der Generator im Allgemeinen innerhalb einer Gondel angeordnet ist. Die Gondel ist vorzugsweise auf einem Turm angeordnet, der entweder als Stahlturm oder als Betonturm, umfassend oder bestehend aus Stahlbeton und/oder Spannbeton, ausgebildet ist. Ein Betonturm ist insbesondere ein Turm, der zum überwiegenden Teil aus Beton gefertigt ist, wobei jedoch Abschnitte auch aus einem anderen Material, vorzugsweise Stahl, hergestellt sein können. Ein derartiger Turm weist vorzugsweise eine rohrförmige Geometrie auf, wobei der Durchmesser des Turms entlang seiner longitudinalen Erstreckung zur Gondel hin abnimmt. Der Durchmesser eines Windenergieanlagen-Turms kann bisweilen 8 Meter überschreiten. Ein Querschnitt des Turms, orthogonal zur longitudinalen Erstreckung des Turms, kann rund oder mehreckig, vorzugsweise achteckig, sein. Wenn im Folgenden von ringförmigen Ausbildungen gesprochen wird, umfassen diese vorzugsweise sowohl runde als auch mehreckige Querschnitte des Turms.

Der Turm umfasst in der Regel eine Anzahl von Windenergieanlagen-Turmabschnitten, die eine ringförmige Geometrie mit einer definierten Höhe aufweisen. Die ringförmig ausgebildete Wandung weist ferner eine Dicke auf. Die Windenergieanlagen-Turmabschnitte sind vorzugsweise entlang der longitudinalen Erstreckung des Turms derart aneinander angeordnet, dass die Stirnflächen im Wesentlichen vollständig einander anliegen.

Die Windenergieanlagen-Turmabschnitte umfassen häufig mehrere Teilringsegmente, um unter anderem den Transport, insbesondere die Anlieferung der Windenergieanlagen-Turmabschnitte zum Aufstellort der Windenergieanlage, durch Bauteile mit einer geringeren Größe zu vereinfachen. Insbesondere betrifft dies die Windenergieanlagen-Turmabschnitte, die im unteren Bereich des Turms angeordnet sind. Ein Windenergieanlagen-Turmabschnitt kann beispielsweise aus zwei Teilringsegmenten, die beispielsweise jeweils ein 180 Bogengrad Segment des Windenergieanlagen-Turmabschnitts bilden, zusammengesetzt werden. Diese Teilringsegmente sind vorzugsweise als Betonfertigteile industriell vorgefertigt und werden beim Aufbau des Turms am Aufstellort der Windenergieanlage zusammengesetzt und miteinander verbunden.

Die Teilringsegmente werden derart zusammengesetzt, dass diese den ringförmigen Windenergieanlagen-Turmabschnitt bilden. Bei der Verwendung von zwei Segmenten entstehen durch das Zusammensetzen zwei vertikal verlaufende Trennfugen. Die Trennfugen entstehen an der Stelle, an der die Teilringsegmente mit ihren jeweils zwei Stoßkanten aneinander stoßen. An diesen Stoßkanten ragen bei bekannten Teilringsegmenten in der Regel abschnittsweise Teile der Bewehrung und/oder Verbindungselemente heraus, damit die Teilringsegmente hier miteinander verbunden werden können. Die Verbindung erfolgt vorzugsweise durch einen Riegel, der die aus einer ersten Stoßkante heraus ragende Bewehrung eines Teilringsegments mit der aus einer zweiten Stoßkante heraus ragenden Bewehrung eines weiteren Teilringsegments verbindet. Die verbleibende vertikale Fuge wird im Allgemeinen anschließend vermörtelt.

Nachteilig hierbei ist, dass dies mit einem hohen Aufwand sowohl in der Produktion der Teilringsegmente als auch in der Verbindung der Teilringsegmente verbunden ist Zudem birgt diese Art der Verbindung die Gefahr der Korrosion der Bewehrungs- bzw. Verbindungsabschnitte in diesem Bereich, die selbst bei sorgfältiger Ausführung der Verbindung auftreten kann. Zudem ist die erreichbare Positionierungsgenauigkeit der Teilringsegmente zueinander begrenzt und liegt üblicherweise im Bereich von etwa ± 10 mm. Weiterhin kann beispielsweise das Vermörteln bei tiefen Temperaturen problematisch sein.

Insgesamt unterliegen Verbindungen, insbesondere Schraubverbindungen, für derartige Stöße bzw. die hier entstehenden Fugen in der Regel hohen Anforderungen und aufgrund dessen meist kurzen Wartungsintervallen, die aufgrund der personalintensiven Durchführung mit hohen Kosten einhergehen.

Das Deutsche Patent- und Markenamt hat in der Prioritätsanmeldung zu vorliegender Anmeldung folgenden Stand der Technik recherchiert: WO 2003/012 335 A1, DE 85 03 887 U1, DE 10 2008 055 607 A1 und DE 298 09 541 U1. Das Dokument US 2013/025229 A1 offenbart weiteren Stand der Technik.

Der vorliegenden Erfindung liegt somit die Aufgabe zugrunde, ein Verfahren zum Verbinden von zwei Teilringsegmenten sowie einen Windenergieanlagen-Turmabschnitt, einen Windenenergieanlagen-Turm und eine Windenergieanlage bereitzustellen, welche einen oder mehrere der genannten Nachteile vermindern oder beseitigen. Insbesondere ist es eine Aufgabe der Erfindung, ein Verfahren zum Verbinden von zwei Teilringsegmenten sowie einen Windenergieanlagen-Turmabschnitt, einen Windenenergieanlagen-Turm und eine Windenergieanlage bereitzustellen, welche die Wartungsintensität der Verbindung von Teilringsegmenten für Windenergieanlagen-Türme vermindern. Ferner ist es eine Aufgabe der Erfindung, ein Verfahren zum Verbinden von mindestens zwei Teilringsegmenten sowie einen Windenergieanlagen-Turmabschnitt, einen Windenenergieanlagen-Turm und eine Windenergieanlage bereitzustellen, welche eine einfach herzustellende und/oder kostengünstige Verbindung von Teilringsegmenten für Windenergieanlagen-Türme ermöglichen.

Ein erster Aspekt der Beschreibung betrifft einen Verbindungskörper zum Einsetzen in einen Windenergieanlagen-Turmabschnitt, umfassend eine erste Seitenwand mit mindestens einer von einem Befestigungselement durchdringbaren ersten Öffnung, und eine der ersten Seitenwand gegenüberliegende zweite Seitenwand mit mindestens einer von einem Befestigungselement durchdringbaren zweiten Öffnung, eine obere Querwand und eine untere, der oberen gegenüberliegende Querwand; wobei die obere und untere Querwand im Wesentlichen orthogonal zu der ersten und zweiten Seitenwand angeordnet sind und diese verbinden.

Der Erfindung liegt die Erkenntnis zugrunde, dass die Kraftverhältnisse in Verbindungen von Teilringsegmenten einen wesentlichen Einfluss auf die notwendige Wartungsintensität haben. Eine geringe Wartungsintensität zeichnet sich unter anderem dadurch aus, dass die Verbindung, insbesondere eine Schraubverbindung, nur sehr selten, das heißt nach sehr vielen Betriebsstunden, überprüft werden muss. Insbesondere Schraubverbindungen müssen bei einer geringen Wartungsintensität lediglich nach sehr vielen Betriebsstunden nachgezogen werden. Bei einer Auslegung der Verbindung derart, dass die Kräfte im Wesentlichen oder ausschließlich in axialer Richtung eines Verbindungselements verlaufen und das Verbindungselement überwiegend auf Zug belastet wird und insbesondere Scherbeanspruchungen reduziert werden können, ist eine deutlich verringerte Wartungsintensität gegeben. Dies gilt insbesondere für Schraubverbindungen, wobei die Schraube dann, insbesondere im Betriebszustand, überwiegend oder ausschließlich axial auf Zug belastet wird.

Der Windenergieanlagen-Turmabschnitt, in den der erfindungsgemäße Verbindungskörper eingesetzt wird, ist für den Bau eines Turms einer Windenergieanlage vorgesehen. Der Windenergieanlagen-Turmabschnitt weist vorzugsweise eine ringförmige Geometrie auf, so dass dieser im Wesentlichen durch eine Außenumfangsfläche, eine Innenumfangsfläche und zwei Stirnseiten gebildet wird. Die Windenergieanlagen-Turmabschnitte werden an ihren Stirnseiten aneinander bzw. aufeinander gesetzt und somit der Turm einer Windenergieanlage aufgebaut. Die Stirnseiten des Windenergieanlagen-Turmabschnitts können Stufen umfassen, die das Positionieren der Turmabschnitte aneinander bzw. aufeinander vereinfachen. Die Turmabschnitte bestehen aus oder umfassen vorzugsweise Beton, insbesondere Stahlbeton oder Spannbeton.

Die erste und/oder zweite Seitenwand des Verbindungskörpers weist vorzugsweise jeweils eine im Wesentlichen flächige Geometrie auf, die durch eine Horizontalerstreckung und eine orthogonal zu dieser verlaufenden Vertikalerstreckung gebildet wird. Ferner weisen die Seitenwände eine orthogonal zur Horizontalerstreckung und zur Vertikalerstreckung gerichtete Dicke auf, die im Vergleich zu den Abmessungen der Horizontalerstreckung und der Vertikalerstreckung bevorzugt eine sehr geringe Abmessung aufweist. Die Seitenwände weisen dabei vorzugsweise eine überwiegend plane Oberfläche auf. Ferner vorzugsweise weisen die Seitenwände abschnittsweise oder vollständig eine konkave Oberfläche auf, beispielsweise um eine Vorspannung eines durch die Seitenwände geführten Befestigungselements zu erreichen. Die Dicke der Seitenwände kann eine kontinuierliche Abmessung aufweisen, wobei ferner auch eine Verdickung oder Verjüngung an entsprechend höher und niedriger belasteten Bereichen vorgesehen werden kann. Ferner besteht die Möglichkeit, dass die Seitenwände Aussparungen und/oder Verrippungen aufweisen.

Die erste Seitenwand und die zweite Seitenwand weisen vorzugsweise jeweils die gleichen Abmessungen für ihre Horizontalerstreckung und für ihre Vertikalerstreckung auf, so dass die flächige Erstreckung der ersten Seitenwand den gleichen Flächeninhalt aufweist wie die flächige Erstreckung der zweiten Seitenwand. Für spezielle Anwendungsfälle kann auch von der zuvor beschriebenen bevorzugten Ausführungsvariante abgewichen werden, so dass der Flächeninhalt der flächigen Erstreckung der ersten Seitenwand ungleich dem Flächeninhalt der flächigen Erstreckung der zweiten Seitenwand ist. Ferner können sich die Abmessungen der ersten Seitenwand und der zweiten Seitenwand hinsichtlich ihrer Horizontalerstreckung und/oder ihrer Vertikalerstreckung unterscheiden. In einer bevorzugten Variante des Verbindungskörpers weisen die zwei Seitenwände die gleiche Abmessung hinsichtlich der Dicke auf.

Die Seitenwände des Verbindungskörpers sind derart verortet, dass die erste Seitenwand gegenüberliegend von der zweiten Seitenwand angeordnet ist. Die Seitenwände sind dementsprechend gegenüber voneinander angeordnet und sind darüber hinaus voneinander beabstandet. Vorzugsweise sind die erste Seitenwand und die zweite Seitenwand flächenparallel zueinander angeordnet, so dass deren jeweiligen Flächennormalen im Wesentlichen parallel verlaufen. Ferner vorzugsweise sind die zwei Seitenwände derart angeordnet, dass die Flächennormale einer Seitenwand auf die flächige Erstreckung der anderen Seitenwand gerichtet ist.

Die erste Seitenwand weist eine von einem Befestigungsmittel durchdringbare, erste Öffnung auf und die zweite Seitenwand weist eine von einem Befestigungselement durchdringbare, zweite Öffnung auf. Die erste und/oder zweite Öffnung weist vorzugsweise einen kreisrunden Querschnitt auf, wobei auch jegliche andere runde Querschnitte möglich sind. Der Querschnitt der Öffnung ist insbesondere ein Querschnitt der flächenparallel zur flächigen Erstreckung der ersten und/oder zweiten Seitenwand verläuft. Ferner kann die erste und/oder zweite Öffnung auch einen eckigen Querschnitt aufweisen, wobei drei- und/oder viereckige Querschnitte besonders bevorzugt sind. Ferner kann die Öffnung eine längliche Erstreckung haben. Die Durchdringungsrichtung der ersten und/oder zweiten Öffnung ist vorzugsweise parallel zu einer Flächennormalen der ersten und/oder zweiten Seitenwand.

Darüber hinaus sind Ausführungsvarianten möglich, bei denen die Seitenwände jeweils zwei, drei oder mehrere Öffnungen aufweisen. Beispielsweise kann die erste Seitenwand zwei, drei oder mehrere erste Öffnungen aufweisen und/oder die zweite Seitenwand zwei, drei oder mehrere zweite Öffnungen aufweisen. Die Öffnungen in der ersten und/oder zweiten Seitenwand, insbesondere die Mittelpunkte der Öffnungen, können in vertikaler Richtung und/oder in horizontaler Richtung voneinander beabstandet sein. Insbesondere ist es bevorzugt, dass die Öffnungen, insbesondere deren Mittelpunkte, in einer Richtung voneinander beabstandet sind, die parallel zu einer Flächenorthogonalen einer der Querwände verläuft.

Die obere Querwand und/oder untere Querwand weist jeweils eine im Wesentlichen flächige Geometrie auf, die jeweils durch eine erste Horizontalerstreckung und eine orthogonal zu dieser verlaufenden zweiten Horizontalerstreckung gebildet wird. Ferner weisen die Querwände eine orthogonal zur ersten Horizontalerstreckung und zur zweiten Horizontalerstreckung gerichtete Dicke auf, die vorzugsweise im Vergleich zu den Abmessungen der ersten Horizontalerstreckung und der zweiten Horizontalerstreckung eine sehr geringe Abmessung aufweist.

Die Querwände weisen dabei vorzugsweise eine überwiegend plane Oberfläche auf. Ferner vorzugsweise weisen die Querwände abschnittsweise oder vollständig eine Wölbung auf, beispielsweise um eine Vorspannung eines durch die Querwände geführtes Montagebefestigungselements zu erreichen. Die Dicke der Querwände kann eine kontinuierliche Abmessung aufweisen, wobei ferner auch eine Verdickung oder Verjüngung an entsprechend höher und niedriger belasteten Bereichen vorgesehen werden kann. Ferner besteht die Möglichkeit, dass die Querwände Aussparungen und/oder Verrippungen aufweisen.

Die obere Querwand und/oder die untere Querwand weisen vorzugsweise jeweils die gleichen Abmessungen für ihre erste Horizontalerstreckung und für ihre zweite Horizontalerstreckung auf, so dass die flächige Erstreckung der oberen Querwand den gleichen Flächeninhalt hat wie die flächige Erstreckung der unteren Querwand. Für spezielle Anwendungsfälle kann auch von der zuvor beschriebenen bevorzugten Ausführungsvariante abgewichen werden, so dass der Flächeninhalt der flächigen Erstreckung der oberen Querwand ungleich dem Flächeninhalt der flächigen Erstreckung der unteren Querwand ist. In einer bevorzugten Variante des Verbindungskörpers weisen die zwei Querwände die gleiche Abmessung hinsichtlich der Dicke auf. Die obere Querwand und die untere Querwand sind gegenüberliegend, so dass sie voneinander beabstandet sind und dass die Flächennormalen der oberen und unteren Querwand, welche jeweils durch den Mittelpunkt der flächigen Erstreckung der Querwände verlaufen, im Wesentlichen die gleiche Achse aufweisen.

Die obere und untere Querwand ist jeweils im Wesentlichen orthogonal zu der ersten und zweiten Seitenwand angeordnet. Die Horizontalerstreckung und/oder die Vertikalerstreckung der Seitenwände können kleiner, gleich oder größer als die Horizontalerstreckung und/oder die Vertikalerstreckung der Querwände sein. Ferner verbindet die obere Querwand die erste und die zweite Seitenwand und die untere Querwand verbindet ebenfalls die erste und die zweite Seitenwand. Die Verbindung der Querwände mit den Seitenwänden kann auf unterschiedliche Weise ausgeführt sein. Insbesondere bevorzugt ist die Gestaltung des Verbindungskörpers als Baugruppe, wobei die zwei Querwände und die zwei Seitenwände wie beschrieben angeordnet und verbunden werden. Vorzugsweise werden die zwei Querwände und die zwei Seitenwände schweißtechnisch miteinander verbunden und/oder diese werden miteinander vernietet und/oder miteinander verschraubt. Grundsätzlich kommen für die Verbindung unterschiedlichste lösbare und unlösbare Verbindungen in Betracht.

Ferner besteht die Möglichkeit, den Verbindungskörper vollständig oder im Wesentlichen vollständig integral bereitzustellen. Dies kann beispielsweise ermöglicht werden, indem der Verbindungskörper als Umform- und/oder Schneidbauteil ausgeführt wird. Ferner besteht die Möglichkeit, den Verbindungskörper als Gießteil oder als generativ herzustellendes Bauteil auszuführen.

Eine bevorzugte Ausführungsvariante des Verbindungskörpers sieht vor, dass die obere Querwand mindestens zwei jeweils von einem Montagebefestigungselement durchdringbare obere Öffnungen aufweist und dass die untere Querwand mindestens zwei jeweils von einem Montagebefestigungselement durchdringbare untere Öffnungen aufweist.

Vorzugsweise weist in dieser Ausführungsform die obere Querwand eine von einem Montagebefestigungselement durchdringbare, erste obere Öffnung und eine von einem Montagebefestigungselement durchdringbare, zweite obere Öffnung, und die untere Querwand eine von einem Montagebefestigungselement durchdringbare, erste untere Öffnung und eine von einem Montagebefestigungselement durchdringbare, zweite untere Öffnung auf.

Die oberen und/oder unteren Öffnungen weisen vorzugsweise einen kreisrunden Querschnitt auf, wobei auch jegliche andere runde Querschnitte möglich sind. Der Querschnitt der Öffnung ist insbesondere ein Querschnitt der flächenparallel zur flächigen Erstreckung der oberen und/oder unteren Querwand verläuft. Ferner kann die obere und/oder untere Öffnung auch einen eckigen Querschnitt aufweisen, wobei drei- und/oder viereckige Querschnitte besonders bevorzugt sind. Ferner können die Öffnungen eine längliche Erstreckung haben. Die Durchdringungsrichtung der oberen und/oder unteren Öffnung ist vorzugsweise im Wesentlichen parallel zu einer Flächennormalen der oberen und/oder unteren Querwand. Ferner können die oberen Öffnungen sich jeweils voneinander unterscheiden. Weiterhin ferner können die unteren Öffnungen sich jeweils voneinander unterscheiden.

Darüber hinaus sind Ausführungsvarianten möglich, bei denen die Querwände jeweils zwei, drei oder mehrere Öffnungen aufweisen. Beispielsweise kann die obere Querwand zwei, drei oder mehrere obere Öffnungen aufweisen und/oder die untere Querwand zwei, drei oder mehrere untere Öffnungen aufweisen. Die oberen und/oder unteren Öffnungen in der oberen und/oder unteren Querwand, insbesondere die Mittelpunkte der Öffnungen, können in Längsrichtung einer der Querwände beabstandet sein und/oder in einer orthogonalen Richtung zu dieser Längsrichtung beabstandet sein. Insbesondere ist es bevorzugt, dass die Öffnungen, insbesondere deren Mittelpunkte, in einer Richtung voneinander beabstandet sind, die parallel zu einer Flächenorthogonalen einer der Seitenwände verläuft.

Die Öffnungen, insbesondere die mindestens ersten und zweiten Öffnung sowie die oberen und unteren Öffnungen, sind dafür ausgebildet von Befestigungselementen und/oder Montagebefestigungselementen durchdrungen zu werden. Diese Öffnungen sind daher derart ausgebildet, dass ein Befestigungselement und/oder Montagebefestigungselement teilweise oder vollständig von einer Seite der Seitenwand und/oder Querwand auf die andere Seite der selbigen Seitenwand und/oder selbigen Querwand gelangen kann, indem es durch die Öffnung hindurch gelangt. Als Befestigungselemente bzw. Montagebefestigungselemente kommen bevorzugt lösbare Verbindungselemente in Betracht, wie beispielsweise Schrauben, Muttern, Bolzen und/oder Stifte, wobei für spezielle Anwendungsfälle auch nicht-lösbare Verbindungselemente in Betracht gezogen werden können.

Eine weitere bevorzugte Ausführungsvariante sieht eine zur ersten und zweiten Seitenwand im Wesentlichen parallele und zwischen diesen angeordnete Trennwand, welche im Wesentlichen orthogonal zu der unteren und oberen Querwand angeordnet ist, vor. Die Trennwand ist demnach im Wesentlichen flächenparallel zur ersten und zweiten Seitenwand. Vorzugsweise ist die Trennwand von der ersten und/oder der zweiten Seitenwand beabstandet, wobei eine imaginäre Verbindungslinie zwischen der ersten und zweiten Seitenwand ebenfalls die Trennwand durchtritt, da die Trennwand zwischen der ersten und zweiten Seitenwand angeordnet ist. Ferner ist die Trennwand im Wesentlichen orthogonal zur oberen und unteren Querwand angeordnet, so dass an der Verbindungsstelle der Trennwand mit der oberen Querwand ein im Wesentlichen rechter Winkel, bzw. ein Winkel von etwa 90 Bogengrad entsteht. Gleiches gilt für die Verbindungsstelle der Trennwand mit der unteren Querwand.

Die Trennwand kann als durchgängige Platte oder mit Durchgangsöffnungen ausgeführt sein. Durchgangsöffnungen können durch eingebrachte Bohrungen entstehen oder dadurch, dass die Trennwand beispielsweise Aussparungen und/oder Verrippungen aufweist. Das Material der Trennwand kann das gleiche Material umfassen oder aus diesem bestehen wie die Seitenwände und/oder die Querwände.

Eine weitere bevorzugte Ausgestaltung sieht vor, dass der Verbindungskörper mit Trennwand einen ersten Teilverbindungskörper ohne Trennwand und/oder einen zweiten Teilverbindungskörper ohne Trennwand umfasst, wobei vorzugsweise der erste Teilverbindungskörper mit einer seiner Seitenwände an einer Seitenwand des zweiten Teilverbindungskörper angeordnet ist. Die Verbindung zwischen diesen Teilverbindungskörpern kann beispielsweise mittels einer Schraubverbindung erfolgen, da an den Seitenwänden Öffnungen vorgesehen sind. Der Verbindungskörper kann somit modular aufgebaut und aus Teilverbindungskörpern zusammengesetzt sein, was die Herstellung des Verbindungskörpers erleichtern kann.

In einer besonders bevorzugten Ausführungsform des Verbindungskörpers ist dieser dadurch gekennzeichnet, dass die Trennwand die obere und untere Querwand jeweils, vorzugsweise im Wesentlichen mittig, unterteilt und wobei vorzugsweise jeweils eine der mindestens zwei oberen Öffnungen auf jeweils einer der beiden Teile der Querwand angeordnet ist und/oder wobei vorzugsweise jeweils eine der mindestens zwei unteren Öffnungen auf jeweils einem der beiden Teile der Querwand angeordnet ist. Die Trennwand ist demnach derart zwischen der ersten Seitenwand und der zweiten Seitenwand angeordnet, dass die Beabstandung von der Trennwand zu den beiden Seitenwänden im Wesentlichen gleich ist. Die Zugänglichkeit zu den oberen und unteren Öffnungen ist weiterhin gegeben, so dass diese von einem Montagebefestigungselement durchdrungen werden können. Ferner befinden sich jeweils eine untere und eine obere Öffnung auf der einen Seite der Trennwand und jeweils eine untere und eine obere Öffnung auf der anderen Seite der Trennwand. Dabei ist die eine Seite der ersten Seitenwand zugewandt und die andere Seite der zweiten Seitenwand zugewandt.

Eine besonders bevorzugte Ausführungsform sieht vor, dass die Trennwand keine Öffnung aufweist. Die Trennwand kann demnach als durchgängige Platte ausgeführt sein.

Eine bevorzugte Ausführungsform sieht eine zur oberen und/oder unteren Querwand im Wesentlichen parallele und zwischen diesen angeordnete Horizontaltrennwand bzw. Horizontaltrennwände vor, welche im Wesentlichen orthogonal zu der ersten und/oder zweiten Seitenwand angeordnet ist bzw. sind. Bei einer Ausführungsvariante des Verbindungskörpers ohne Trennwand, welche parallel zu den Seitenwänden angeordnet ist, kann sich die Horizontaltrennwand von der ersten bis zur zweiten Seitenwand erstrecken. Die Befestigung der Horizontaltrennwand an den Seitenwänden kann form-, kraft- und/oder stoffschlüssig erfolgen. Mit der Trennwand, welche parallel zu den Seitenwänden angeordnet ist, kann sich eine Horizontaltrennwand beispielsweise von der ersten Seitenwand bis zur Trennwand erstrecken. Vorzugsweise ist flächenparallel zu dieser Horizontaltrennwand eine weitere Horizontaltrennwand vorgesehen, die sich von der zweiten Seitenwand bis zur Trennwand erstreckt.

In einer weiteren Ausführungsform sind zwei oder mehrere Horizontaltrennwände vorgesehen, die vertikal voneinander beabstandet sind, vorgesehen. Ferner kann sich die mindestens eine Horizontaltrennwand von der ersten bis zur zweiten Seitenwand erstrecken und ferner kann sich zwischen der Horizontaltrennwand und einer der Querwände bzw. zwischen zwei Horizontaltrennwänden eine Trennwand erstrecken, die im Wesentlichen flächenparallel zur ersten und/oder zweiten Seitenwand angeordnet ist. Gemäß einer weiteren Ausführungsform weist der Verbindungskörper eine Rückwand auf, welche orthogonal zu der ersten und zweiten Seitenwand und zu der oberen und unteren Querwand angeordnet ist und diese verbindet. Die Rückwand weist vorzugsweise eine flächige Erstreckung auf, die eine von den zwei Seitenwänden und zwei Querwänden aufgespannte Öffnung vollständig oder teilweise verschließt.

Eine weitere günstige Ausgestaltung des Verbindungskörpers sieht vor, dass die Rückwand keine Öffnungen aufweist. Die flächige Erstreckung der Rückwand kann demnach durchgängig ausgeführt sein. Optional kann die Rückwand auch eine oder mehrere Öffnungen aufweisen.

Eine besonders bevorzugte Ausführungsform des Verbindungskörpers sieht vor, dass eine Seite des Verbindungskörpers, welche orthogonal zu der ersten und zweiten Seitenwand und zu der oberen und unteren Querwand, und vorzugsweise der Rückwand gegenüberliegend, angeordnet ist, offen ausgebildet ist. Diese Ausführungsvariante resultiert darin, dass der Verbindungskörper eine im Wesentlichen würfel- oder quaderförmige Geometrie aufweist, wobei die Geometrie fünf geschlossene bzw. mit Öffnungen versehene und eine offene Seite aufweist. Die offene Seite ist dabei der Rückwand gegenüberliegend.

Die hier in Bezug auf den ersten Aspekt beschriebene im Wesentlichen würfel- oder quaderförmige Geometrie mit im Wesentlichen orthogonal zueinander angeordneten Seiten- und Querwänden sowie ggf. Trenn- und Rückwand umfasst im Sinne dieser Anmeldung auch solche Ausgestaltungen, bei denen die Form angepasst ist auf die Ringform des Teilringsegments bzw. des Turmabschnitts und etwa die Seitenwände radial ausgerichtet sind. Aufgrund des in der Regel im Vergleich zu den Abmessungen des Verbindungskörpers deutlich größeren Radius eines Teilringsegments bzw. Turmabschnitts lassen sich jedoch auch diese Ausführungen unter die hier beschriebenen Geometrien fassen.

Eine weitere bevorzugte Ausführungsform sieht vor, dass die Öffnungen jeweils beabstandet, vorzugsweise gleichmäßig beabstandet, von den Kanten der ersten und/oder zweiten Seitenwände und/oder oberen und/oder unteren Querwände angeordnet sind. Die von einem Befestigungselement und/oder Montagebefestigungselement durchdringbare erste und zweite Öffnung sowie durchdringbaren oberen und unteren Öffnungen ist/sind dabei jeweils beabstandet von den Kanten der Seitenwände und von den Kanten der Querwände. Diese Beabstandung vereinfacht das Anbringen von Befestigungselementen und/oder Montagebefestigungselementen in und/oder an den Öffnungen. Ferner kann diese Beabstandung die Steifigkeit des Verbindungskörpers erhöhen.

Eine besonders bevorzugte Ausführungsform des Verbindungskörpers sieht vor, dass Durchdringungsrichtungen der Öffnungen in der ersten und zweiten Seitenwand sowie in der oberen und unteren Querwand in einer gemeinsamen Ebene, vorzugsweise einer im Wesentlichen vertikalen Ebene, liegen. Die Durchdringungsrichtungen der Öffnungen in der ersten und zweiten Seitenwand bilden dabei eine erste Erstreckungsrichtung dieser gemeinsamen Ebene aus. Die Durchdringungsrichtungen der Öffnungen in der oberen und unteren Querwand bilden dabei eine zweite Erstreckungsrichtung der gemeinsamen Ebene aus. Eine im Wesentlichen vertikale Ebene wird durch die Durchdringungsrichtungen gebildet, wenn die Durchdringungsrichtungen jeweils im Wesentlichen parallel zu den Flächennormalen der Flächen verlaufen, in die die Öffnungen eingebracht sind.

Der Verbindungskörper kann unterschiedliche Materialien umfassen oder aus diesen bestehen. Vorzugsweise besteht der Verbindungskörper aus metallischen Materialien oder umfasst diese. Besonders bevorzugt ist, dass der Verbindungskörper Stahl umfasst oder aus Stahl besteht, da insbesondere Stahl für die hohen Zugbelastungen geeignet ist. Ferner ist insbesondere bevorzugt dass der Verbindungskörper Gusswerkstoffe bzw. Gussmaterialien umfasst oder daraus besteht. Ferner kann der Verbindungskörper aus Nicht-Eisen- (NE-) Metallen, wie beispielsweise speziellen Legierungen, bestehen oder diese umfassen. Ferner vorzugsweise kann der Verbindungskörper aus Kunststoff bestehen oder diesen umfassen, wobei insbesondere Kunststoffe mit einer hohen Zugfestigkeit, beispielsweise faserverstärkte Kunststoffe, bevorzugt sind. Ferner kann der Verbindungskörper aus Beton, insbesondere hochfestem Beton, bestehen oder diesen umfassen.

Gemäß einem Aspekt der Erfindung wird die eingangs genannte Aufgabe gelöst durch einen Windenergieanlagen-Turmabschnitt nach Anspruch 1.

Wenn zwei, drei oder mehrere horizontale Befestigungsanker an einem Teilringsegment vorgesehen sind, können diese vorzugsweise auch mit einer entsprechenden Anzahl von Befestigungselementen mit dem Verbindungskörper verbunden werden. Dahingehend besteht auch die Möglichkeit mehr als eine Öffnung je Seitenwand vorzusehen, sodass für jeden Befestigungsanker je Teilringsegment auch je eine Öffnung je Seitenwand vorgesehen ist. Alternativ können auch mehrere Befestigungselemente eine einzelne Öffnung durchdringen, insbesondere eine ovale, schlitzförmige oder langlochförmige Öffnung, um in zwei, drei oder mehrere horizontale Befestigungsanker einzudringen.

Der Turmabschnitt ist als Ringsegment ausgebildet, welches vorzugsweise einen vollständigen Kreis ausbildet und orthogonal zu einem Radius des Ringsegments eine Höhe aufweist. Ferner weist das Ringsegment eine Wandung auf, wobei dadurch eine Außenumfangsfläche und eine Innenumfangsfläche ausgebildet werden. Der Turmabschnitt umfasst ferner mindestens ein erstes und ein zweites Teilringsegment, die im Falle von insgesamt zwei Teilringsegmenten beispielsweise jeweils eine Winkelerstreckung von 180 Bogengrad aufweisen. Es besteht darüber hinaus die Möglichkeit, dass der Turmabschnitt auch mehr als zwei Teilringsegmente umfasst, wobei die Teilringsegmente vorzugsweise in Summe stets eine Winkelerstreckung von 360 Bogengrad aufweisen. Eine Teilung des Turmabschnitts in Teilringsegmente bietet insbesondere den Vorteil eines vereinfachten Transports, da Turmabschnitte mir großen Durchmessern nicht mehr konventionell auf den üblichen Transportwegen befördert werden können.

Die Teilringsegmente sind vorzugsweise jeweils als Mantelsegment, vorzugsweise als Betonkörper, ausgebildet. Der bevorzugte Betonkörper ist ferner vorzugsweise als bewehrter Betonkörper, insbesondere als Stahlbeton- und/oder Spannbetonkörper, ausgebildet. Darüber hinaus wird der bevorzugte Betonkörper vorzugsweise als Betonfertigteil vorgesehen, so dass dieses industriell vorgefertigt werden kann.

Die Teilringsegmente stoßen an mindestens einem im Wesentlichen vertikalen Stoß aneinander. Der mindestens eine vertikale Stoß weist dabei eine vorzugsweise und im Wesentlichen gleiche vertikale Abmessung auf wie die Höhe des Turmabschnitts. Im Falle von zwei Teilringsegmenten, mit beispielsweise jeweils 180 Bogengrad Winkelerstreckung, umfasst der Turmabschnitt insgesamt zwei im Wesentlichen vertikale Stöße. Die Zahl der Stöße pro Turmabschnitt erhöht sich dementsprechend mit einer steigenden Anzahl an Teilringsegmenten pro Turmabschnitt.

Im Bereich des Stoßes ist eine Aussparung angeordnet, in die ein Verbindungskörper eingesetzt werden kann. Die Aussparung ist vorzugsweise zur einen Hälfte in dem am Stoß angrenzenden ersten Teilringsegment und zur anderen Hälfte in dem am Stoß angrenzenden zweiten Teilringsegment angeordnet. Die Aussparung weist vorzugsweise eine an den Verbindungskörper angepasste geometrische Form auf, wobei die Abmessungen der Aussparung vorzugsweise größer sind als die des Verbindungskörpers. Besonders bevorzugt ist eine Abmessung der Aussparung, insbesondere in vertikaler Richtung und/oder horizontaler Richtung bzw. im Wesentlichen in Richtung der axialen Erstreckung der horizontalen Befestigungsanker, die die Abmessungen des Verbindungskörpers jeweils, vorzugsweise zumindest geringfügig, überschreiten.

Der Verbindungskörper ist vorzugsweise gemäß dem zuvor beschriebenen Aspekt der Beschreibung ausgebildet. In einer weiteren Ausführungsvariante sind an einem Stoß mehr als eine Aussparung, in die ein Verbindungskörper eingesetzt werden kann, vorgesehen. Dies ist insbesondere bevorzugt, wenn der Turmabschnitt eine Höhe aufweist, die das Vorsehen von mehr als einer Aussparung ermöglicht und/oder erforderlich und/oder sinnvoll macht. Die Aussparungen an einem einzelnen Stoß sind vorzugsweise vertikal übereinander angeordnet und weisen vorzugsweise jeweils eine vertikale Beabstandung auf.

Die Teilringsegmente weisen im Bereich des Stoßes, insbesondere im Bereich der Aussparung, jeweils einen im Wesentlichen horizontalen Befestigungsanker auf. Die Befestigungsanker sind vorzugsweise jeweils in die Teilringsegmente eingebettet und insbesondere in die Teilringsegmente einbetoniert. Durch die horizontale Ausrichtung der Befestigungsanker und deren Einbettung weisen diese insbesondere in horizontaler bzw. axialer Zugrichtung eine hohe Festigkeit auf.

Die Befestigungsanker dienen in Kombination mit dem Verbindungskörper und mit Befestigungselementen der Verbindung von zwei an einem Stoß angeordneten Teilringsegmenten. Der Verbindungskörper ist zu diesem Zweck im Bereich des Stoßes mit dem im Wesentlichen horizontalen Befestigungsanker des ersten Teilringsegments durch ein erstes Befestigungselement verbunden. Diese Verbindung wird hergestellt, indem das erste Befestigungselement eine Öffnung in der ersten Seitenwand des Verbindungskörpers durchdringt und mit dem im Wesentlichen horizontalen Befestigungsanker eine Verbindung eingeht.

Darüber hinaus wird der Verbindungskörper mit dem im Wesentlichen horizontalen Befestigungsanker des zweiten Teilringsegments durch ein zweites Befestigungselement verbunden. Diese Verbindung wird hergestellt, indem das zweite Befestigungselement eine Öffnung in der zweiten Seitenwand des Verbindungskörpers durchdringt und mit dem im Wesentlichen horizontalen Befestigungsanker eine Verbindung eingeht. Im Falle von drei oder mehr Teilringsegmenten erfolgt an den dann vorhandenen Stößen eine wie zuvor beschriebene Verbindung der Teilringsegmente.

In einer bevorzugten Fortbildung des Windenergieanlagen-Turmabschnitts ist vorgesehen, dass das erste und zweite Teilringsegment im Bereich des Stoßes, insbesondere im Bereich der Aussparung, jeweils mindestens zwei gegenüberliegende, im Wesentlichen vertikale, Befestigungsanker aufweist, wobei vorzugsweise im Montagezustand im Bereich des Stoßes der Verbindungskörper mit den mindestens zwei im Wesentlichen vertikalen Befestigungsankern des ersten Teilringsegments durch mindestens ein erstes oberes und mindestens ein erstes unteres Montagebefestigungselement, vorzugsweise lösbar, verbunden ist, welche jeweils eine Öffnung in einer oberen und einer unteren Querwand des Verbindungskörpers durchdringen, und der Verbindungskörper mit den mindestens zwei im Wesentlichen vertikalen Befestigungsankern des zweiten Teilringsegments durch mindestens ein zweites oberes und mindestens ein zweites unteres Montagebefestigungselement, vorzugsweise lösbar, verbunden ist, welche jeweils eine Öffnung in einer oberen und einer unteren Querwand des Verbindungskörpers durchdringen.

Wenn drei oder mehrere vertikale Befestigungsanker an einem Teilringsegment vorgesehen sind, können diese vorzugsweise auch mit einer entsprechenden Anzahl von Befestigungselementen mit dem Verbindungskörper verbunden werden. Dahingehend besteht auch die Möglichkeit mehr als zwei Öffnungen je Querwand vorzusehen, sodass für jeden Befestigungsanker je Teilringsegment auch je eine Öffnung je Querwand vorgesehen ist. Alternativ können auch mehrere Befestigungselemente eine einzelne Öffnung durchdringen, insbesondere eine ovale, schlitzförmige oder langlochförmige Öffnung, um in zwei, drei oder mehrere vertikale Befestigungsanker einzudringen.

Die Teilringsegmente umfassen demnach je Stoß mindestens zwei im Wesentlichen vertikale Befestigungsanker, die insbesondere im Bereich der Aussparungen angeordnet sind. Eine imaginäre axiale Verlängerung der im Wesentlichen vertikalen Befestigungsanker verläuft demnach vorzugsweise durch eine Aussparung hindurch. Die beiden im Wesentlichen vertikalen Befestigungsanker des ersten Teilringsegments sind, vorzugsweise im Montagezustand, mit dem Verbindungskörper durch ein erstes oberes und ein erstes unteres Montagebefestigungselement, vorzugsweise lösbar, verbunden. Die Montagebefestigungselemente durchdringen zu diesem Zweck jeweils eine Öffnung in einer oberen und in einer unteren Querwand des Verbindungskörpers und gehen jeweils eine Verbindung mit einem im Wesentlichen vertikalen Befestigungsanker ein. Die beiden im Wesentlichen vertikalen Befestigungsanker des ersten Teilringsegments sind vorzugsweise horizontal gespiegelt zueinander angeordnet, derart, dass der untere der beiden Befestigungsanker von oben mit einem ersten unteren Montagebefestigungselement zugänglich ist und der obere der beiden Befestigungsanker von unten mit einem ersten oberen Montagebefestigungselement zugänglich ist.

Ferner wird der Verbindungskörper mit den beiden im Wesentlichen vertikalen Befestigungsankern des zweiten Teilringsegments verbunden. Diese Verbindung erfolgt vorzugsweise lösbar und insbesondere durch ein zweites oberes und ein zweites unteres Montagebefestigungselement. Die beiden im Wesentlichen vertikalen Befestigungsanker des zweiten Teilringsegments sind ebenfalls vorzugsweise horizontal gespiegelt zueinander angeordnet, derart, dass der untere der beiden Befestigungsanker von oben mit einem ersten unteren Montagebefestigungselement zugänglich ist und der obere der beiden Befestigungsanker von unten mit einem ersten oberen Montagebefestigungselement zugänglich ist.

Die Montagebefestigungselemente durchdringen zu diesem Zweck die Öffnungen in der oberen und unteren Querwand des Verbindungskörpers. Im Falle von drei oder mehr Teilringsegmenten erfolgt an den dann vorhandenen mehreren Stößen vorzugsweise jeweils eine wie zuvor beschriebene Verbindung der Teilringsegmente.

Vorzugsweise werden die Montagebefestigungselemente aus den vertikalen Befestigungsankern nach erfolgter Montage des Windenergieanlagen-Turmabschnitts, ggf. auch erst nach erfolgter Montage des gesamten Windenergieanlagen-Turms oder eines Teils davon, entfernt, die Verbindung zwischen dem Verbindungskörper und den vertikalen Befestigungsankern also wieder gelöst. Dieser bevorzugten Ausführungsform liegt die bereits erläuterte Erkenntnis zugrunde, dass eine Verbindung, insbesondere eine Schraubverbindung, eine geringere Wartungsintensität aufweist, wenn diese im Wesentlichen eine Zugbelastung erfährt. Insbesondere reduziert sich die Wartungsintensität durch eine Reduzierung oder Vermeidung von Querkräften und/oder Scherkräften innerhalb dieser Verbindung im Betriebszustand, so dass die Demontage oder Lockerung der Montagebefestigungselemente aus den vertikalen Befestigungsankern dazu führt, dass die horizontale Verbindung somit im Wesentlichen axiale Kräfte aufnimmt und die Scherbeanspruchung deutlich reduziert wird.

In einer weiteren bevorzugten Ausführungsform ist vorgesehen, dass die Befestigungsanker als Gewindeanker mit Innengewinde ausgebildet sind. Das Innengewinde ist insbesondere ausgebildet, um ein korrespondierendes Gegenstück mit einem Außengewinde aufzunehmen. Daher ist in einer besonders bevorzugten Ausführungsform vorgesehen, dass die Befestigungselemente und/oder die Montagebefestigungselemente als Schrauben, vorzugsweise als Sechskantschrauben, ausgebildet sind. Die Schrauben weisen ein Außengewinde auf, das vorzugsweise korrespondierend zu dem Innengewinde der Befestigungsanker ausgebildet ist.

Gemäß einem weiteren Aspekt der Erfindung wird die eingangs erläuterte Aufgabe gelöst durch einen Windenergieanlagen-Turm umfassend mehrere bestimmungsgemäß übereinander angeordnete Windenergieanlagen-Turmabschnitte nach mindestens einer der vorhergehend beschriebenen Ausführungsformen, wobei vorzugsweise die Stöße benachbarter Turmabschnitte zueinander versetzt angesetzt sind. Versetzt bedeutet, dass die Fugen der Stöße von zwei benachbart übereinander angeordneten Teilringsegmenten nicht vertikal übereinander angeordnet sind. Die versetzt zueinander angeordneten Stöße erhöhen die Steifigkeit des Turms.

Gemäß einem weiteren Aspekt der Erfindung wird die eingangs genannte Aufgabe gelöst durch eine Windenergieanlage, umfassend einen Windenergieanlagen-Turm nach dem zuvor beschriebenen Aspekt.

Gemäß einem weiteren Aspekt der Erfindung wird die eingangs genannte Aufgabe gelöst durch ein Verfahren zum Verbinden von zwei Teilringsegmenten zu einem Windenergieanlagen-Turmabschnitt, insbesondere zu einem Windenergieanlagen-Turmabschnitt nach mindestens einem der vorhergehend beschriebenen Aspekte, umfassend die Schritte Anordnen von einem ersten und einem zweiten, jeweils als Mantelsegment ausgebildeten, Teilringsegment derart, dass sie an mindestens einem im Wesentlichen vertikalen Stoß aneinanderstoßen, Einsetzen eines Verbindungskörpers, insbesondere eines Verbindungskörpers nach mindestens einer der vorhergehend beschriebenen Ausführungsformen, in einer im Bereich des Stoßes angeordneten Aussparung, wobei das erste und zweite Teilringsegment im Bereich des Stoßes, insbesondere im Bereich der Aussparung, jeweils mindestens einen im Wesentlichen horizontalen Befestigungsanker aufweist, im Bereich des Stoßes, Befestigen des Verbindungskörpers mit dem mindestens einen im Wesentlichen horizontalen Befestigungsanker des ersten Teilringsegments durch mindestens ein erstes Befestigungselement, welches eine Öffnung in einer ersten Seitenwand des Verbindungskörpers durchdringt, und Befestigen des Verbindungskörpers mit dem mindestens einen im Wesentlichen horizontalen Befestigungsanker des zweiten Teilringsegments durch mindestens ein zweites Befestigungselement, welches eine Öffnung in einer zweiten Seitenwand des Verbindungskörpers durchdringt. Im Falle von drei oder mehr Teilringsegmenten erfolgt an den dann vorhandenen Stößen eine wie zuvor beschriebene Verbindung der Teilringsegmente.

Wenn zwei, drei oder mehrere horizontale Befestigungsanker an einem Teilringsegment vorgesehen sind, können diese vorzugsweise auch mit einer entsprechenden Anzahl von Befestigungselementen mit dem Verbindungskörper verbunden werden. Dahingehend besteht auch die Möglichkeit mehr als eine Öffnung je Seitenwand vorzusehen, sodass für jeden Befestigungsanker je Teilringsegment auch je eine Öffnung je Seitenwand vorgesehen ist. Alternativ können auch mehrere Befestigungselemente eine einzelne Öffnung durchdringen, insbesondere eine ovale, schlitzförmige oder langlochförmige Öffnung, um in zwei, drei oder mehrere horizontale Befestigungsanker einzudringen

Eine bevorzugte Ausführungsform des Verfahrens sieht ein Befestigen, vorzugsweise im Montagezustand, im Bereich des Stoßes einer oberen und einer unteren des Verbindungskörpers mit jeweils gegenüberliegenden Flächen der Aussparung vor.

Eine bevorzugte Ausführungsform des Verfahrens sieht vor, dass das erste und zweite Teilringsegment im Bereich des Stoßes, insbesondere im Bereich der Aussparung, jeweils mindestens zwei gegenüberliegende, im Wesentlichen vertikale, Befestigungsanker aufweist, und Befestigen, vorzugsweise im Montagezustand, im Bereich des Stoßes des Verbindungskörpers gemäß einer der im Vorherigen beschriebenen Ausführungsvarianten mit den mindestens zwei im Wesentlichen vertikalen Befestigungsankern des ersten Teilringsegments durch mindestens ein erstes oberes und mindestens ein erstes unteres Montagebefestigungselement, vorzugsweise lösbar, welche jeweils eine Öffnung in einer oberen und einer unteren Querwand des Verbindungskörpers durchdringen, und Befestigen des Verbindungskörpers mit den mindestens zwei im Wesentlichen vertikalen Befestigungsankern des zweiten Teilringsegments durch mindestens ein zweites oberes und mindestens ein zweites unteres Montagebefestigungselement, vorzugsweise lösbar, welche jeweils eine Öffnung in einer oberen und einer unteren Querwand des Verbindungskörpers durchdringen.

Wenn drei oder mehrere vertikale Befestigungsanker an einem Teilringsegment vorgesehen sind, können diese vorzugsweise auch mit einer entsprechenden Anzahl von Befestigungselementen mit dem Verbindungskörper verbunden werden. Dahingehend besteht auch die Möglichkeit mehr als zwei Öffnungen je Querwand vorzusehen, sodass für jeden Befestigungsanker je Teilringsegment auch je eine Öffnung je Querwand vorgesehen ist. Alternativ können auch mehrere Befestigungselemente eine einzelne Öffnung durchdringen, insbesondere eine ovale, schlitzförmige oder langlochförmige Öffnung, um in zwei, drei oder mehrere vertikale Befestigungsanker einzudringen.

Eine weitere bevorzugte Ausführungsform des Verfahrens sieht vor, dass nach dem Befestigen des jeweiligen Verbindungskörpers mit dem jeweiligen horizontalen Befestigungsanker des ersten und zweiten Teilringsegments die Befestigung des jeweiligen Verbindungskörpers mit den jeweiligen beiden vertikalen Befestigungsankern des ersten und zweiten Teilringsegments wieder gelöst wird. Das Lösen erfolgt vorzugsweise nachdem zwei Teilringsegmente miteinander, durch das Verbinden der Befestigungselemente mit den im Wesentlichen horizontalen Befestigungsankern, verbunden wurden. Ferner vorzugsweise erfolgt das Lösen erst wenn alle vorgesehenen Turmabschnitte angeordnet wurden und der Turm somit fertiggestellt wurde. Darüber hinaus vorzugsweise erfolgt das Lösen nachdem die Windenergieanlage vollständig montiert wurde. Im Falle von drei oder mehr Teilringsegmenten erfolgt an den dann vorhandenen Stößen eine wie zuvor beschriebene Verbindung der Teilringsegmente.

Eine Alternative zur Befestigung des Verbindungskörpers über die Montagebefestigungselemente mit den im Wesentlichen vertikalen Befestigungsankern besteht darin, dass, vorzugsweise im Montagezustand, zwischen mindestens einer Querwand des Verbindungskörpers und einer an diese Querwand angrenzende Fläche der Aussparung ein, zwei oder mehrere Beabstandungselemente, wie beispielsweise Einlegebleche, Abstandskeile oder ähnliches, angeordnet werden. Vorzugsweise werden diese Beabstandungselemente zwischen die beiden gegenüberliegenden Querwände des Verbindungskörpers und die jeweils an diese Querwände angrenzenden Flächen der Aussparung angeordnet. Ähnlich wie die Befestigung des Verbindungskörpers über die Montagebefestigungselemente mit den im Wesentlichen vertikalen Befestigungsankern können über die Beabstandungselemente Kräfte, wie Schub- bzw. Scherkräfte übertragen werden, was insbesondere im Montagezustand von Vorteil ist. Ferner vorzugsweise werden diese Beabstandungselemente nach Beendigung des Montagezustands wieder entfernt, um die gewünschte Wartungsarmut der Verbindung zu erzielen.

Gemäß einem Aspekt der Beschreibung wird die eingangs genannte Aufgabe gelöst durch ein Verfahren zum Verbinden von Teilringsegmenten, insbesondere von zwei in Längsrichtung eines Turmes benachbart angeordneten Teilringsegmenten, umfassend Anordnen von einem unterem und einem oberen, jeweils als Mantelsegment ausgebildeten, Teilringsegment derart, dass sie an mindestens einem im Wesentlichen horizontalen Stoß aneinanderstoßen, Einsetzen eines Verbindungskörpers, insbesondere eines Verbindungskörpers nach mindestens einer der zuvor beschriebenen Ausführungsvarianten, in einer im Bereich des horizontalen Stoßes angeordneten Aussparung, wobei das untere und obere Teilringsegment im Bereich des horizontalen Stoßes, insbesondere im Bereich der Aussparung, jeweils mindestens einen im Wesentlichen vertikalen Befestigungsanker aufweist, im Bereich des horizontalen Stoßes, Befestigen des Verbindungskörpers mit dem mindestens einen im Wesentlichen vertikalen Befestigungsanker des unteren Teilringsegments durch mindestens ein erstes Befestigungselement, welches eine Öffnung in einer ersten Seitenwand des Verbindungskörpers durchdringt, und Befestigen des Verbindungskörpers mit dem mindestens einen im Wesentlichen vertikalen Befestigungsanker des oberen Teilringsegments durch mindestens ein zweites Befestigungselement, welches eine Öffnung in einer zweiten Seitenwand des Verbindungskörpers durchdringt.

Wenn zwei, drei oder mehrere vertikale Befestigungsanker an einem Teilringsegment vorgesehen sind, können diese vorzugsweise auch mit einer entsprechenden Anzahl von Befestigungselementen mit dem Verbindungskörper verbunden werden. Dahingehend besteht auch die Möglichkeit mehr als zwei Öffnungen je Seitenwand vorzusehen, sodass für jeden Befestigungsanker je Teilringsegment auch je eine Öffnung je Seitenwand vorgesehen ist. Alternativ können auch mehrere Befestigungselemente eine einzelne Öffnung durchdringen, insbesondere eine ovale, schlitzförmige oder langlochförmige Öffnung, um in zwei, drei oder mehrere vertikale Befestigungsanker einzudringen. Dieses Verfahren dient insbesondere der Verbindung von zwei in Längsrichtung eines Turmes benachbart angeordneten Teilringsegmenten, die übereinander angeordnet sind, und somit einen Turm, insbesondere einen Windenergieanlagen-Turm, in vertikaler Richtung ausbilden können. Ferner dient dieses Verfahren der Verbindung von Turmabschnitten, insbesondere von Windenergieanlagen-Turmabschnitten, untereinander.

Vorzugsweise erfolgt die Verbindung von zwei in Längsrichtung eines Turmes benachbart angeordneten Teilringsegmenten, die übereinander angeordnet sind und an mindestens einem im Wesentlichen horizontalen Stoß, grundsätzlich analog zu der Verbindung von zwei Teilringsegment die an mindestens einem im Wesentlichen vertikalen Stoß aneinanderstoßen, mit dem Unterschied, dass die Verbindung und ihre jeweiligen Elemente um 90° gedreht sind. Entsprechend ist auch die übrige Beschreibung der Verbindungskörper und des Verbindungsverfahrens auf diese Verbindung von zwei in Längsrichtung eines Turmes benachbart angeordneten Teilringsegmenten anwendbar unter entsprechender Anpassung von Orientierungen und/oder Bezügen, wie z.B. horizontal, vertikal, oben und unten, etc.

Auf diese Weise lässt sich eine besonders vorteilhafte Modulbauweise realisieren, mit der ein Windenergieanlagen-Turm beispielsweise mit als Betonfertigteilen ausgebildeten Bauelementen in Elementbauweise zeit- und kostengünstig erstellt werden kann. In besonders vorteilhafter Weise sind die Aussparungen so ausgebildet und angeordnet, dass für die horizontalen und vertikalen Stöße gleichartige Verbindungskörper genutzt werden können. Die einzelnen Bauelemente können beispielsweise viereckförmig, trapezförmig oder bogenförmig ausgebildet sein, so dass sich vorzugsweise im zur Längsachse des Windenergieanlagen-Turms verschiedenen Querschnitte des Turms ergeben können, beispielsweise verschiedene Vielecke oder gerundete Querschnitte, bis zum kreisrunden Querschnitt. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Verbindungskörpers verwiesen.

Wenn in dieser Beschreibung eine Öffnung, insbesondere eine erste Öffnung und/oder eine zweite Öffnung, und/oder ein horizontaler Befestigungsanker, und/oder ein vertikaler Befestigungsanker, und/oder ein Befestigungselement und/oder ein Montagebefestigungselement beschrieben werden, sind damit immer auch mindestens eine Öffnung, insbesondere mindestens eine erste Öffnung und/oder mindestens eine zweite Öffnung, und/oder mindestens ein horizontaler Befestigungsanker, und/oder mindestens ein vertikaler Befestigungsanker, und/oder mindestens ein Befestigungselement und/oder mindestens ein Montagebefestigungselement gemeint. Ebenso werden unter zwei Öffnungen, insbesondere unter zwei oberen Öffnungen und/oder unter zwei unteren Öffnungen, in dieser Beschreibung immer auch mindestens zwei Öffnungen, insbesondere mindestens zwei oberen Öffnungen und/oder mindestens zwei unteren Öffnungen, verstanden.

Bevorzugte Ausführungsformen der Erfindung werden beispielhaft anhand der beiliegenden Figuren erläutert. Es zeigen:
- Figur 1:: eine schematische Darstellung einer Windenergieanlage;
- Figur 2:: eine vertikal geschnittene Seitenansicht eines Turmabschnitts;
- Figur 3:: eine horizontal geschnittene Draufsicht des Turmabschnitts gemäß Figur 2;
- Figur 4:: eine geschnittene Ansicht des eingesetzten Verbindungskörpers gemäß Schnittebene B-B von Figur 2;
- Figur 5:: eine geschnittene Ansicht des eingesetzten Verbindungskörpers gemäß Schnittebene A-A von Figur 3;
- Figur 6:: eine Seitenansicht eines Verbindungskörpers;
- Figur 7: eine Draufsicht des Verbindungskörpers gemäß Figur 6;
- Figur 8: eine weitere Seitenansicht des Verbindungskörpers gemäß Figur 6;
- Figur 9: eine schematische dreidimensionale Ansicht einer weiteren Ausführungsform des Verbindungskörpers;
- Figur 10: eine schematische Anordnung von drei Teilringsegmenten sowie deren Befestigung; und
- Figur 11: eine weitere schematische Anordnung von drei Teilringsegmenten sowie deren Befestigung; und
- Figur 12: eine schematische dreidimensionale Ansicht einer weiteren Ausführungsform des Verbindungskörpers.

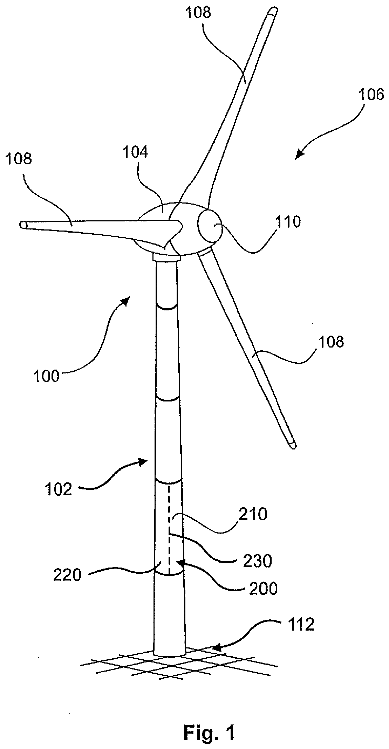

Figur 1 zeigt eine schematische Darstellung einer Windenergieanlage 100. Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Der Turm 102 umfasst eine Anzahl an Turmabschnitten 200, die im Wesentlichen aus einem ersten Teilringsegment 210 und einem zweiten Teilringsegment 220 bestehen. Die Teilringsegmente stoßen an einem ersten Stoß 230 und einem zweiten Stoß 240 aneinander.

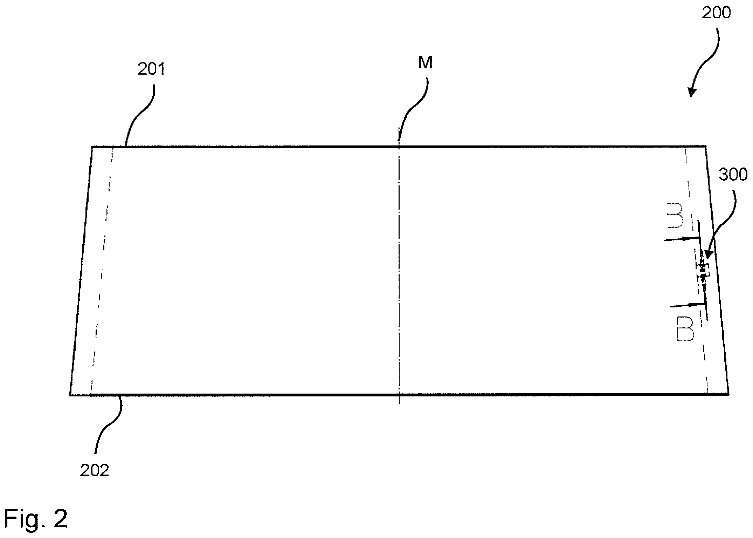

Figur 2 zeigt eine vertikal geschnittene Seitenansicht eines Turmabschnitts 200. Die äußere Form des Turms 102 wird insbesondere durch eine Vielzahl an Turmabschnitten 200 gebildet. Die Turmabschnitte 200 werden übereinander an ihren Stirnflächen zusammengesetzt, wobei eine untere Stirnfläche 202 eines Turmabschnitts 200 jeweils auf einer oberen Stirnfläche 201 eines weiteren, benachbarten Turmabschnitts angeordnet wird. Der Turmabschnitt 200 weist ferner einen kreisrunden Querschnitt mit einer Mittelachse M auf. Da sich der Turm 102 im axialen Verlauf vom Fundament 112 zur Gondel 104 verjüngt, weisen die Turmabschnitte 200 ebenfalls eine sich verjüngende Geometrie auf. Der Durchmesser an der unteren Stirnseite 202 ist daher größer als an der oberen Stirnseite 201. In der Wandung des Turmabschnitts 200 ist ein Verbindungskörper 300 angeordnet.

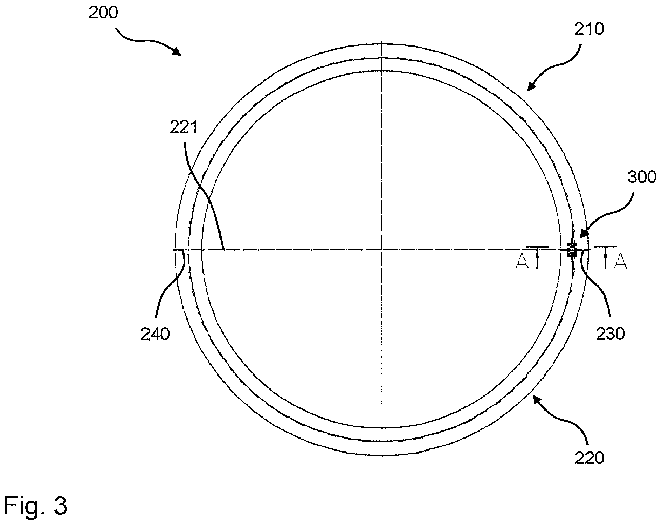

Figur 3 zeigt eine horizontal geschnittene Draufsicht des Turmabschnitts 200 gemäß Figur 2, wobei der Turmabschnitt 200 insbesondere ein erstes Teilringsegment 210 und ein zweites Teilringsegment 220 umfasst. Die Teilringsegmente 210, 220 sind spiegelsymmetrisch bezüglich einer imaginären, geraden Linie 221, die von einem ersten Stoß 230 zu einem zweiten Stoß 240 verläuft. An dem ersten Stoß 230 ist der Verbindungskörper 300 dargestellt, der das erste Teilringsegment 210 und das zweite Teilringsegment 220 miteinander verbindet.

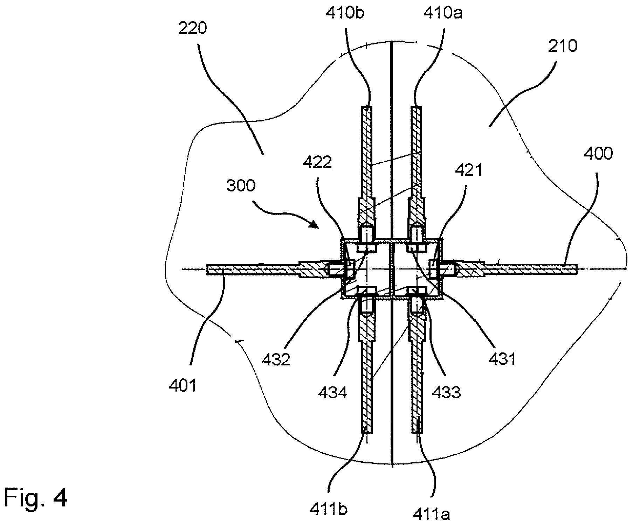

Figur 4 zeigt eine geschnittene Ansicht des eingesetzten Verbindungskörpers 300 gemäß Schnittebene B-B von Figur 2 zur Verbindung des ersten Teilringsegments 210 mit dem zweiten Teilringsegment 220. Der Verbindungskörper 300 ist innerhalb einer Aussparung angeordnet, die zur Hälfte in dem ersten Teilringsegment 210 und zur anderen Hälfte in dem zweiten Teilringsegment 220 verortet ist. Ferner umfasst die Verbindung einen ersten horizontalen Befestigungsanker 400, der innerhalb der Wandung des ersten Teilringsegments 210 angeordnet ist, und einen zweiten horizontalen Befestigungsanker 401, der innerhalb der Wandung des zweiten Teilringsegments 220 angeordnet ist.

Ferner umfasst die Verbindung einen ersten oberen vertikalen Befestigungsanker 410a und einen zweiten oberen vertikalen Befestigungsanker 410b sowie einen ersten unteren vertikalen Befestigungsanker 411a und einen zweiten unteren vertikalen Befestigungsanker 411b. Der erste obere vertikale Befestigungsanker 410a und der erste untere vertikale Befestigungsanker 411a befinden sich im Bereich des Stoßes innerhalb der Wandung des ersten Teilringsegments 210. Darüber hinaus ist der zweite obere vertikale Befestigungsanker 410b und der zweite untere Befestigungsanker 411b im Bereich des Stoßes innerhalb der Wandung des zweiten Teilringsegments 220 angeordnet.

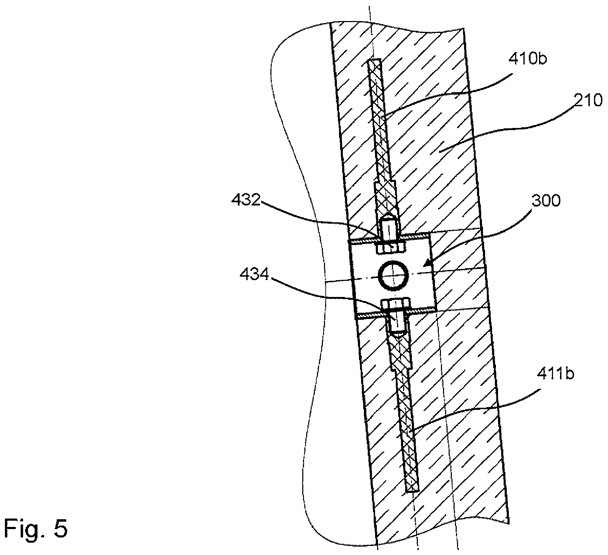

Figur 5 zeigt eine geschnittene Ansicht des eingesetzten Verbindungskörpers 300 gemäß Schnittebene A-A von Figur 3. Der Verbindungskörper 300 ist in einer Aussparung angeordnet. Ferner ist der zweite obere im Wesentlichen vertikale Befestigungsanker 410b und der zweite untere im Wesentlichen vertikale Befestigungsanker 411b in der Wandung des Teilringsegments 210 eingelassen.

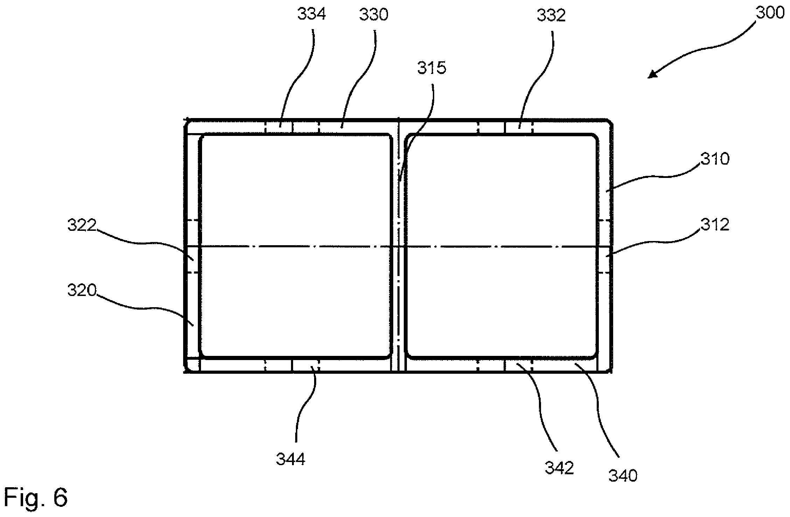

Figur 6 zeigt eine Seitenansicht eines Verbindungskörpers 300 mit einer ersten Seitenwand 310 und einer zweiten Seitenwand 320, die flächenparallel angeordnet sind, so dass deren Flächennormalen parallel sind. Die zwei Seitenwände sind durch eine obere Querwand 330 und eine untere Querwand 340 verbunden, wobei die obere Querwand 330 und die untere Querwand 340 ebenfalls flächenparallel angeordnet sind. Die Seitenwände 310, 320 und die Querwände 330, 340 weisen jeweils eine flächige Erstreckung und eine konstante Dicke auf. Flächenparallel zur ersten und zur zweiten Seitenwand 310, 320 und zwischen diesen angeordnet, befindet sich eine Trennwand 315, die sich von der oberen Querwand 330 hin zur unteren Querwand 340 erstreckt.

Die erste Seitenwand 310 umfasst eine erste Öffnung 312, die von einem Befestigungselement durchdringbar ist. Die erste Öffnung 312 weist eine Durchdringungsrichtung auf, die parallel zu einer Flächennormalen der ersten Seitenwand 310 verläuft. Die zweite Seitenwand 320 umfasst eine zweite Öffnung 322, die von einem Befestigungselement durchdringbar ist. Die zweite Öffnung 322 weist eine Durchdringungsrichtung auf, die parallel zu einer Flächennormalen der zweiten Seitenwand 320 verläuft. Ferner ist die Durchdringungsrichtung der ersten Öffnung 312 gleich der Durchdringungsrichtung der zweiten Öffnung 322.

Die obere Querwand 330 umfasst eine erste obere Öffnung 332 und eine zweite obere Öffnung 334, die von einem Befestigungselement durchdringbar sind. Die obere Querwand 330 wird durch die Trennwand 315 in zwei Teile geteilt. Der erste Teil ist aus Perspektive der Trennwand 315 der ersten Seitenwand 310 und der zweite Teil ist der zweiten Seitenwand 320 zugewandt. Die zwei Teile weisen die gleichen Abmessungen auf. Die erste obere Öffnung 332 ist in der Mitte dieses ersten Teils der oberen Querwand 330 und die zweite obere Öffnung 334 ist in der Mitte des zweiten Teils der oberen Querwand 330 angeordnet. Die zwei oberen Öffnungen 332, 334 weisen jeweils eine Durchdringungsrichtung auf, die parallel zu einer Flächennormalen der oberen Querwand 330 verläuft. Die untere Querwand 340 umfasst eine erste untere Öffnung 342 und eine zweite untere Öffnung 344, die von einem Befestigungselement durchdringbar sind. Die erste untere Öffnung weist die gleiche Mittelachse auf wie die erste obere Öffnung 332. Ferner weist die zweite untere Öffnung 344 die gleiche Mittelachse auf wie die zweite obere Öffnung 334.

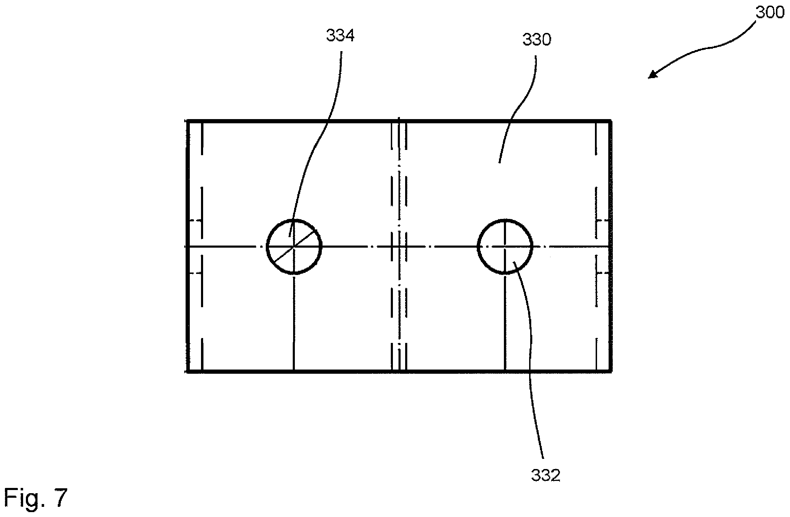

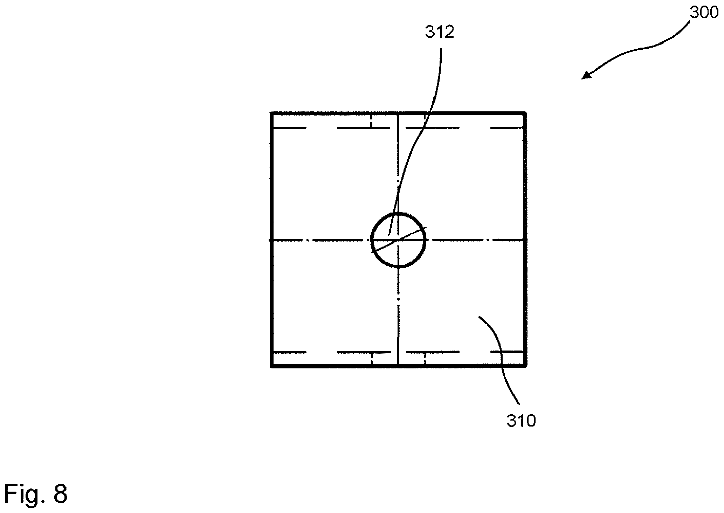

Figur 7 zeigt eine Draufsicht des Verbindungskörpers 300 gemäß Figur 6, wobei die obere Querwand 330 die zuvor beschriebene erste obere Öffnung 332 und die zweite obere Öffnung 334 umfasst. Figur 8 zeigt eine weitere Seitenansicht des Verbindungskörpers gemäß Figur 6, wobei die erste Seitenwand 310 die zuvor beschriebene erste Öffnung 312 umfasst.

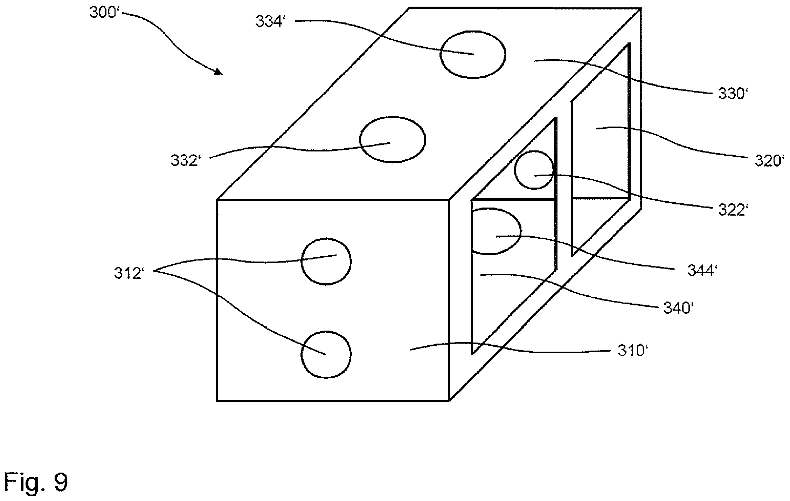

Figur 9 zeigt eine schematische dreidimensionale Ansicht einer weiteren Ausführungsform des Verbindungskörpers 300' mit einer ersten Seitenwand 310', einer zweiten Seitenwand 320', einer oberen Querwand 330' und einer unteren Querwand 340', wobei hier ebenfalls eine erste obere Öffnung 332' und eine zweite obere Öffnung 334' in der oberen Querwand 330' angeordnet sind. Ferner umfasst die untere Querwand eine erste untere Öffnung (nicht dargestellt) und eine zweite untere Öffnung 344'. In diesem Ausführungsbeispiel umfassen die Seitenwände 310', 320' jeweils zwei vertikal übereinander angeordnete Öffnungen, die von einem Befestigungselement durchdrungen werden können. Die erste Seitenwand 310' umfasst zwei erste Öffnungen 312' und die zweite Seitenwand 320' umfasst zwei zweite Öffnungen 322', wobei lediglich die untere der zwei zweiten Öffnungen 322' abgebildet ist.

Die zwei Öffnungen 310, 312, die zwei oberen Öffnungen 332, 334 und die zwei unteren Öffnungen 342, 344 sind dafür ausgebildet von einem Befestigungselement durchdrungen zu werden. Die insbesondere in Figur 4 und Figur 5 dargestellten Befestigungsanker 400, 401, 410a, 410b, 411a, 411b sind derart angeordnet, dass deren Achse mit der Mittelachse in Durchdringungsrichtung einer der Öffnungen 312, 322, 332, 334, 342, 344 zusammenfällt. Dadurch wird ermöglicht, dass ein Befestigungselement 421, 422 und/oder ein Montagebefestigungselement 431, 432, 433, 434 in eine der Öffnungen geführt und mit einem an die Öffnung angrenzenden Befestigungsanker verbunden werden kann. Insbesondere durch die Verbindung des ersten horizontalen Befestigungsankers 400 mit dem Verbindungskörper 300 und durch die Verbindung des zweiten horizontalen Befestigungsankers 401 mit dem Verbindungskörper 300 wird das Teilringsegment 210 mit dem zweiten Teilringsegment 200 verbunden.

Die Verbindung des ersten horizontalen Befestigungsankers 400 mit dem Verbindungskörper 300 erfolgt durch die Einführung eines ersten Befestigungselements 421 in die erste Öffnung 312 der Seitenwand 310 und der anschließenden Befestigung dieses ersten Befestigungselements 421 mit dem ersten horizontalen Befestigungsankers 400. Vorzugsweise weist der erste horizontale Befestigungsanker 400 ein Innengewinde auf und das erste Befestigungselement 421 ist an einem Ende mit einem Außengewinde und an seinem anderen Ende mit einem Schraubenkopf versehen. Der Schraubenkopf weist vorzugsweise eine größere Querschnittsfläche auf als die erste Öffnung 312, so dass der Schraubenkopf nicht in die erste Öffnung 312 eindringen kann. Somit ist beispielhaft eine Verbindung des ersten horizontalen Befestigungsankers 400 mit dem Verbindungskörper 300 möglich. Diese Möglichkeit der Verbindung gilt analog für die Verbindung des zweiten horizontalen Befestigungsankers 401 mit dem Verbindungskörper 300 mittels eines zweiten Befestigungselements 422, indem das zweite Befestigungselement durch die zweite Öffnung 322 in der zweiten Seitenwand 320 geführt wird.

Der Verbindungskörper 300 wird mindestens für den Zeitraum der Montage durch Montagebefestigungselemente 431-434 mit den oberen vertikalen Befestigungsankern 410a, 410b und unteren vertikalen Befestigungsankern 411a, 411b verbunden. Dafür wird das erste obere Montagebefestigungselement 431 durch die erste obere Öffnung 332 des Verbindungskörpers 300 geführt und mit dem dahinterliegenden ersten oberen vertikalen Befestigungsanker 410a verbunden. Ferner wird das zweite obere Montagebefestigungselement 432 durch die zweite obere Öffnung 334 geführt und mit dem dahinterliegenden zweiten oberen vertikalen Befestigungsanker 410b verbunden. Analog wird der Verbindungskörper 300 mit dem zwei unteren vertikalen Befestigungsankern 411a, 411b verbunden, indem das erste untere Montagebefestigungselement 433 durch die erste untere Öffnung 342 und das zweite untere Montagebefestigungselement 434 durch die zweite untere Öffnung 344 geführt werden sowie das erste untere und das zweite untere Montagebefestigungselement 433, 434 jeweils mit dem hinter der ersten und zweiten unteren Öffnung 342, 344 befindlichen ersten und zweiten unteren vertikalen Befestigungsanker 411a, 411b verbunden werden.

Die Verbindungen des Verbindungskörpers 300 mit den vertikalen Befestigungsankern 410a, 410b, 411a, 411b durch Montagebefestigungselemente 431, 432, 433, 434 ist insbesondere für den Zeitraum der Montage des Windenergieanlagenturms 102 bzw. für den Zeitraum der Montage der Windenergieanlage 100 vorgesehen. Diese Verbindungen werden zu Beginn der Montage des Verbindungskörpers 300 hergestellt, wobei diese, je nach Montagebedingungen, vor oder nach der Herstellung der Verbindungen des Verbindungskörpers 300 mit den horizontalen Befestigungsankern 400, 401 hergestellt werden. Ferner besteht auch die Möglichkeit, dass zunächst die Verbindungen des Verbindungskörpers 300 mit den Befestigungsankern des ersten Teilringsegments 210 und anschließend die Verbindungen des Verbindungskörpers 300 mit den Befestigungsankern des zweiten Teilringsegments 220 hergestellt werden.

Die Verbindungen des Verbindungskörpers 300 mit den vertikalen Befestigungsankern 410a, 410b, 411a, 411b dienen der Herstellung einer Montagefestigkeit während des Zeitraums der Montage. Nachdem der Windenergieanlagenturm 102 oder die Windenergieanlage 100 überwiegend oder vollständig montiert ist, werden die Verbindungen der vertikalen Befestigungsanker 410a, 410b, 411a, 411b mit dem Verbindungskörper 300 vorzugsweise wieder vollständig gelöst. Alternativ werden diese Verbindungen nicht vollständig, sondern nur teilweise gelöst.

Der Verbindungskörper 300 hat zum einen den Vorteil, die Herstellung der Teilringsegmente und ihrer Anschlüsse zu vereinfachen, zum anderen ist er selbst einfach herzustellen. Insbesondere aber ist die Herstellung der Verbindung der Teilringsegmente einfach und sicher. Ein weiterer besonderer Vorteil darin, dass die Befestigung von zwei Teilringsegmenten 210, 220 mit mindestens zwei vertikalen Stößen 230, 240 und einer im Wesentlichen horizontal wirkenden Verbindungskraft mittels des Verbindungskörpers 300 eine geringere Wartungsintensität aufweist. Dies resultiert daher, dass die horizontal angeordnete Schraubverbindung im Betriebszustand vornehmlich eine Zugbelastung und lediglich geringe Querkräfte erfährt. Die oben beschriebene Anordnung mit im Betriebszustand entfernten oder gelösten vertikalen Verbindungen resultiert demnach in einer geringeren Wartungsintensität der Schraubfuge.

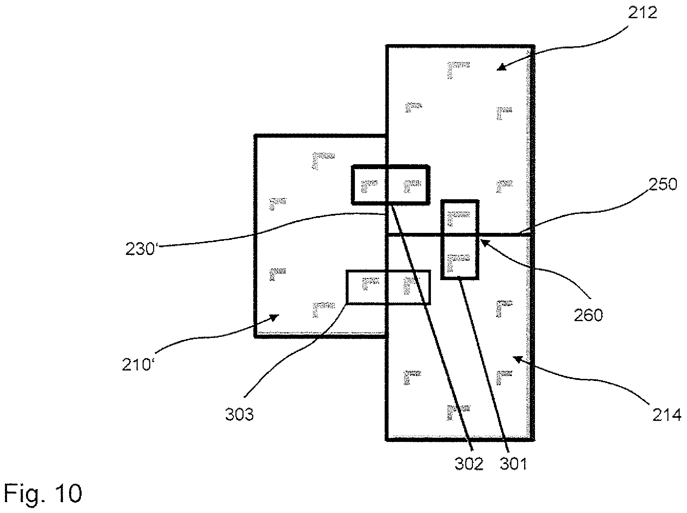

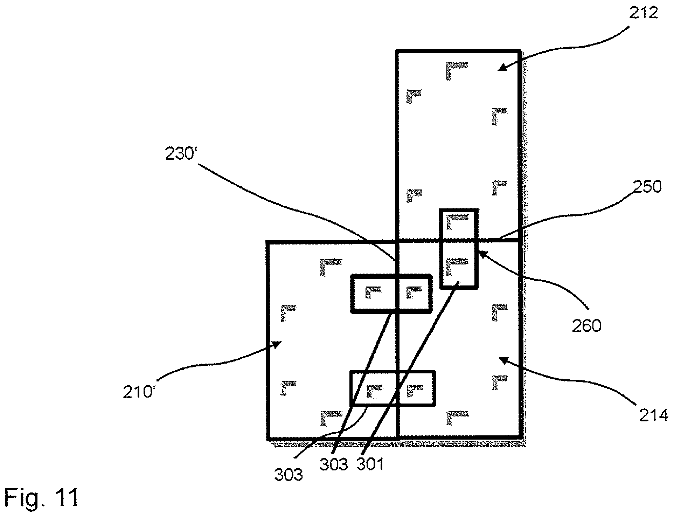

Figur 10 und Figur 11 zeigen schematische Anordnungen von drei Teilringsegmenten 210', 212, 214 sowie deren Befestigung. Das obere Teilringsegment 212 und das untere Teilringsegment 214 sind vertikal benachbart zueinander angeordnet und bilden daher einen horizontalen Stoß 250 aus. Eine Aussparung 260 erstreckt sich vom oberen zum unteren Teilringsegment 212, 214, wobei in dieser Aussparung 260 ein Verbindungskörper 301 angeordnet ist. Mittels des Verbindungskörpers 301 werden das obere und das untere Teilringsegment 212, 214 miteinander verbunden. Dafür ist in dem oberen und unteren Teilringsegment 212, 214 jeweils mindestens ein im Wesentlichen vertikaler Befestigungsanker vorgesehen, der mit einem Befestigungselement verbindbar ist. Durch das Einführen der Befestigungselemente durch Öffnungen an den Seitenwänden des Verbindungskörpers 301 und der Befestigung der Befestigungselemente an den vertikalen Befestigungsankern erfolgt eine Verbindung, insbesondere eine wartungsarme Verbindung, des oberen und unteren Teilringsegments 212, 214.

Darüber hinaus ist an dem oberen und/oder unteren Teilringsegment 212, 214 ein erstes Teilringsegment 210' derart angeordnet, dass ein vertikaler, erster Stoß 230' ausgebildet wird. Im Ausführungsbeispiel der Figur 10 ist das erste Teilringsegment 210' mittels des Verbindungskörpers 302 mit dem oberen Teilringsegment 212 und mittels des Verbindungskörpers 303 mit dem unteren Teilringsegment 214 verbunden. Das Ausführungsbeispiel der Figur 11 zeigt eine Verbindung des unteren Teilringsegments 214 mit dem ersten Teilringsegment 210' mittels zweier Verbindungskörper 303.

Die Teilringsegmente 210',212, 214 können vorzugsweise als Betonfertigteile ausgebildet sein, so dass sich der Windenergieanlagen-Turm in einer besonders zeit- und kostengünstigen Elementbauweise realisieren lässt. Die Aussparungen sind vorzugsweise so angeordnet und ausgebildet, dass für die horizontalen und vertikalen Verbindungen gleichartige Verbindungskörper 301, 302, 303 genutzt werden können, wodurch eine besonders effiziente Bauweise entsteht.

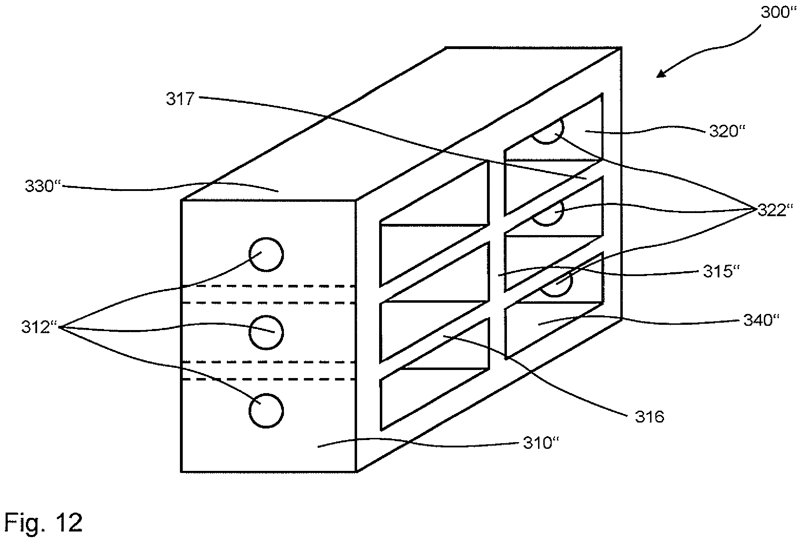

Figur 12 zeigt eine schematische dreidimensionale Ansicht einer weiteren Ausführungsform des Verbindungskörpers. Der Verbindungskörper 300" unterscheidet sich vom Verbindungskörper 300', gezeigt in Figur 9, insbesondere dadurch, dass der Verbindungskörper 300" einen ersten Steg 316 und einen zweiten Steg 317 aufweist. Die Stege 316, 317 sind im Wesentlichen flächenparallel zur oberen und unteren Querwand 330", 340" angeordnet und erstrecken sich von der ersten Seitenwand 310" bis zur zweiten Seitenwand 320". Der Verbindungskörper 300" weist eine Trennwand 315" auf, die im Wesentlichen flächenparallel zu der ersten und zweiten Seitenwand 310", 320" und ferner zwischen den Seitenwänden 310", 320" angeordnet ist. Die erste Seitenwand 310" weist insgesamt drei erste Öffnungen 312" auf. Die zweite Seitenwand 320" weist insgesamt drei zweite Öffnungen 322" auf.

Die erste Öffnung 312", welche die geringste Beabstandung zur oberen Querwand 330" aufweist, ist in der ersten Seitenwand 310" an einer Stelle angeordnet, die zwischen der oberen Querwand 330" und dem zweiten Steg 317 liegt. Die erste Öffnung 312", welche die geringste Beabstandung zur unteren Querwand 340" aufweist, ist in der ersten Seitenwand 310" an einer Stelle angeordnet, die zwischen der unteren Querwand 340" und dem ersten Steg 316 liegt. Die weitere erste Öffnung 312" ist in der ersten Seitenwand 310" zwischen dem ersten Steg 316 und dem zweiten Steg 317 angeordnet.

Die zweite Öffnung 322", welche die geringste Beabstandung zur oberen Querwand 330" aufweist, ist in der zweiten Seitenwand 320" an einer Stelle angeordnet, die zwischen der oberen Querwand 330" und dem zweiten Steg 317 liegt. Die zweite Öffnung 322", welche die geringste Beabstandung zur unteren Querwand 340" aufweist, ist in der zweiten Seitenwand 320" an einer Stelle angeordnet, die zwischen der unteren Querwand 340" und dem ersten Steg 316 liegt. Die weitere zweite Öffnung 322" ist in der zweiten Seitenwand 320" zwischen dem ersten Steg 316 und dem zweiten Steg 317 angeordnet. Die im Vorherigen genannten Öffnungen des Verbindungskörpers 300" sind jeweils als Durchgangsöffnungen ausgebildet.

Die Anzahl der ersten und/oder zweiten Öffnungen 312, 312', 312", 322, 322', 322" kann in weiteren Ausführungsformen des Verbindungskörpers 300, 300', 300" erhöht werden. Beispielsweise besteht auch die Möglichkeit in der ersten und/oder zweiten Seitenwand 310, 310', 310", 320, 320', 320" zwei, drei oder mehrere erste und/oder zweite Öffnungen 312, 312', 312", 322, 322', 322" vorzusehen. Es können daher Reihen von Öffnungen an den Seitenwänden 310, 310', 310", 320, 320', 320" vorgesehen werden. Darüber hinaus besteht die Möglichkeit, dass die Öffnungen, insbesondere deren Mittelpunkte, in verschiedene Richtungen voneinander beabstandet sind. Beispielsweise besteht für die Seitenwände 310, 310', 310", 320, 320', 320" die Möglichkeit, dass die ersten und/oder zweiten Öffnungen 312, 312', 312", 322, 322', 322" in vertikaler und/oder horizontaler Richtung voneinander beabstandet sind. Dieser Verbindungskörper eignet sich insbesondere aber nicht ausschließlich für die Variante in der, vorzugsweise im Montagezustand, zwischen mindestens einer Querwand 330", 340" des Verbindungskörpers und einer an diese Querwand 330", 340" angrenzende Fläche der Aussparung 260 ein, zwei oder mehrere Beabstandungselemente, wie beispielsweise Einlegebleche, Abstandskeile oder ähnliches, angeordnet werden.

### Bezugszeichen

- 100: Windenergieanlage
- 102: Turm
- 104: Gondel
- 106: Rotor
- 108: Rotorblätter
- 110: Spinner
- 112: Fundament
- 200: Turmabschnitt
- 201: obere Stirnfläche
- 202: untere Stirnfläche
- 210, 210': erstes Teilringsegment
- 212: oberes Teilringsegment
- 214: unteres Teilringsegment
- 220: zweites Teilringsegment
- 221: Stoßverbindungslinie
- 230, 230': erster Stoß
- 240: zweiter Stoß
- 250: horizontaler Stoß
- 260: Aussparung
- 300, 300', 300", 301, 302, 303: Verbindungskörper
- 310, 310', 310": erste Seitenwand
- 312, 312', 312": erste Öffnung
- 315, 315": Trennwand
- 316: erster Steg
- 317: zweiter Steg
- 320, 320', 320": zweite Seitenwand
- 322, 322', 322": zweite Öffnung
- 330, 330', 330": obere Querwand
- 332, 332': erste obere Öffnung
- 334, 334': zweite obere Öffnung
- 340, 340', 340": untere Querwand
- 342: erste untere Öffnung
- 344, 344': zweite untere Öffnung
- 400: erster horizontaler Befestigungsanker
- 401: zweiter horizontaler Befestigungsanker
- 410a: erster oberer vertikaler Befestigungsanker
- 410b: zweiter oberer vertikaler Befestigungsanker
- 411a: erster unterer vertikaler Befestigungsanker
- 411b: zweiter unterer vertikaler Befestigungsanker
- 421: erstes Befestigungselement
- 422: zweites Befestigungselement
- 431: erstes oberes Montagebefestigungselement
- 432: zweites oberes Montagebefestigungselement
- 433: erstes unteres Montagebefestigungselement
- 434: zweites unteres Montagebefestigungselement
- M: Mittelachse

## Patentansprüche

1. Windenergieanlagen-Turmabschnitt (200), wobei der Turmabschnitt (200) mindestens ein erstes und ein zweites Teilringsegment (210, 220) umfasst,
wobei die beiden Teilringsegmente (210, 220) jeweils als Mantelsegment, und vorzugsweise als Betonkörper, ausgebildet sind und an mindestens einem im Wesentlichen vertikalen Stoß (230, 240) aneinanderstoßen,
wobei im Bereich des Stoßes (230, 240) eine Aussparung angeordnet ist, in die ein Verbindungskörper eingesetzt ist, und
wobei das erste und zweite Teilringsegment (210, 220) im Bereich des Stoßes (230, 240), insbesondere im Bereich der Aussparung, jeweils mindestens einen im Wesentlichen horizontalen Befestigungsanker (400, 401) aufweist, **dadurch gekennzeichnet, dass** im Bereich des Stoßes (230, 240) der Verbindungskörper (300, 300', 300") mit dem mindestens einen im Wesentlichen horizontalen Befestigungsanker (400, 401) des ersten Teilringsegments (210) durch mindestens ein erstes Befestigungselement (421) verbunden ist, welches eine Öffnung (312, 312', 312") in einer ersten Seitenwand (310, 310', 310") des Verbindungskörpers (300, 300', 300") durchdringt, und der Verbindungskörper (300, 300', 300") mit dem mindestens einen im Wesentlichen horizontalen Befestigungsanker (400, 401) des zweiten Teilringsegments (220) durch mindestens ein zweites Befestigungselement (422) verbunden ist, welches eine Öffnung (322, 322', 322") in einer zweiten Seitenwand (320, 320', 320") des Verbindungskörpers (300, 300', 300") durchdringt.

2. Windenergieanlagen-Turmabschnitt (200) nach dem vorhergehenden Anspruch,
**dadurch gekennzeichnet, dass** das erste und zweite Teilringsegment (210, 220) im Bereich des Stoßes (230, 240), insbesondere im Bereich der Aussparung, jeweils mindestens zwei gegenüberliegende, im Wesentlichen vertikale, Befestigungsanker (410a, 410b, 411a, 411b) aufweist, wobei vorzugsweise im Montagezustand im Bereich des Stoßes (230, 240) der Verbindungskörper (300, 300', 300") mit den mindestens zwei im Wesentlichen vertikalen Befestigungsankern (410a, 411a) des ersten Teilringsegments (210) durch mindestens ein erstes oberes und mindestens ein erstes unteres Montagebefestigungselement (431, 433), vorzugsweise lösbar, verbunden ist, welche jeweils eine Öffnung in einer oberen und einer unteren Querwand (330, 330', 330", 340, 340', 340") des Verbindungskörpers (300, 300', 300") durchdringen, und der Verbindungskörper (300, 300', 300") mit den mindestens zwei im Wesentlichen vertikalen Befestigungsankern (410b, 411b) des zweiten Teilringsegments (220) durch mindestens ein zweites oberes und mindestens ein zweites unteres Montagebefestigungselement (432, 434), vorzugsweise lösbar, verbunden ist, welche jeweils eine Öffnung in einer oberen und einer unteren Querwand (330, 330', 330", 340, 340', 340") des Verbindungskörpers (300, 300', 300") durchdringen.

3. Windenergieanlagen-Turmabschnitt (200) nach mindestens einem der beiden vorhergehenden Ansprüche,
**dadurch gekennzeichnet, dass** die Befestigungsanker (400, 401, 410a, 410b, 411a, 411b) als Gewindeanker mit Innengewinde ausgebildet sind, und/oder **dadurch gekennzeichnet, dass** die Befestigungselement (421, 422) und/oder die Montagebefestigungselement (431, 432, 433, 434) als Schrauben, vorzugsweise als Sechskantschrauben, ausgebildet sind.

4. Windenergieanlagen-Turm umfassend mehrere bestimmungsgemäß übereinander angeordnete Windenergieanlagen-Turmabschnitte (200) nach mindestens einem der vorhergehenden Ansprüche, wobei vorzugsweise die Stöße (230, 240) benachbarter Turmabschnitte (200) zueinander versetzt angesetzt sind.

5. Windenergieanlage (100), umfassend einen Windenergieanlagen-Turm nach dem vorhergehenden Anspruch.

6. Verfahren zum Verbinden von zwei Teilringsegmenten (210, 220) zu einem Windenergieanlagen-Turmabschnitt (200), insbesondere zu einem Windenergieanlagen-Turmabschnitt (200) nach mindestens einem der vorhergehenden Ansprüche 1-3, umfassend:
- Anordnen von einem ersten und einem zweiten, jeweils als Mantelsegment ausgebildeten, Teilringsegment (210, 220) derart, dass sie an mindestens einem im Wesentlichen vertikalen Stoß (230, 240) aneinanderstoßen,
- Einsetzen eines Verbindungskörpers in einer im Bereich des Stoßes (230, 240) angeordneten Aussparung,
- wobei das erste und zweite Teilringsegment (210, 220) im Bereich des Stoßes (230, 240), insbesondere im Bereich der Aussparung, jeweils mindestens einen im Wesentlichen horizontalen Befestigungsanker (400, 401) aufweist,
- im Bereich des Stoßes (230, 240), Befestigen des Verbindungskörpers (300, 300', 300") mit dem mindestens einen im Wesentlichen horizontalen Befestigungsanker (400) des ersten Teilringsegments (210) durch mindestens ein erstes Befestigungselement (421), welches eine Öffnung (312, 312', 312") in einer ersten Seitenwand (310, 310', 310") des Verbindungskörpers (300, 300', 300") durchdringt, und Befestigen des Verbindungskörpers (300, 300', 300") mit dem mindestens einen im Wesentlichen horizontalen Befestigungsanker (401) des zweiten Teilringsegments (220) durch mindestens ein zweites Befestigungselement (422), welches eine Öffnung (322, 322', 322") in einer zweiten Seitenwand (320, 320', 320") des Verbindungskörpers (300, 300', 300") durchdringt.

7. Verfahren nach dem vorhergehenden Anspruch,
umfassend
- Befestigen, vorzugsweise im Montagezustand, im Bereich des Stoßes (230, 240) einer oberen und einer unteren Querwand (330, 330', 330", 340, 340', 340") des Verbindungskörpers (300, 300', 300") mit jeweils gegenüberliegenden Flächen der Aussparung.

8. Verfahren nach mindestens einem der beiden vorhergehenden Ansprüche **dadurch gekennzeichnet, dass**
- das erste und zweite Teilringsegment (210, 220) im Bereich des Stoßes (230, 240), insbesondere im Bereich der Aussparung, jeweils mindestens zwei gegenüberliegende, im Wesentlichen vertikale, Befestigungsanker (410a, 410b, 411a, 411b) aufweist, und
- Befestigen, vorzugsweise im Montagezustand, im Bereich des Stoßes (230, 240) des Verbindungskörpers (300, 300', 300") mit den mindestens zwei im Wesentlichen vertikalen Befestigungsankern (410a, 411a) des ersten Teilringsegments (210) durch mindestens ein erstes oberes und mindestens ein erstes unteres Montagebefestigungselement (431, 433), vorzugsweise lösbar, welche jeweils eine Öffnung in einer oberen und einer unteren Querwand (330, 330', 330", 340, 340', 340") des Verbindungskörpers (300, 300', 300") durchdringen, und Befestigen des Verbindungskörpers (300, 300', 300") mit den mindestens zwei im Wesentlichen vertikalen Befestigungsankern (410b, 411b) des zweiten Teilringsegments (220) durch mindestens ein zweites oberes und mindestens ein zweites unteres Montagebefestigungselement (432, 434), vorzugsweise lösbar, welche jeweils eine Öffnung in einer oberen und einer unteren Querwand (330, 330', 330", 340, 340', 340") des Verbindungskörpers (300, 300', 300") durchdringen.

9. Verfahren nach mindestens einem der vorhergehenden Ansprüche 6-8, **dadurch gekennzeichnet, dass** nach dem Befestigen des jeweiligen Verbindungskörpers (300, 300', 300") mit dem jeweiligen horizontalen Befestigungsanker (400, 401) des ersten und zweiten Teilringsegments (210, 220) die Befestigung des jeweiligen Verbindungskörpers (300, 300', 300") mit den jeweiligen beiden vertikalen Befestigungsankern (410a, 410b, 411a, 411b) des ersten und zweiten Teilringsegments (210, 220) wieder gelöst wird.

## Claims

1. A wind power installation tower section (200), wherein the tower section (200) comprises at least one first and one second partial ring segment (210, 220), wherein the two partial ring segments (210, 220) are each designed as a casing segment, and preferably as a concrete element, and butt against each other at at least one substantially vertical joint (230, 240),
wherein a recess, into which a connecting element is inserted, is arranged in the region of the joint (230, 240), and
wherein, in the region of the joint (230, 240), in particular in the region of the recess, the first and second partial ring segment (210, 220) in each case has at least one substantially horizontal fastening anchor (400, 401),
**characterized in that** in the region of the joint (230, 240), the connecting element (300, 300', 300") is connected to the at least one substantially horizontal fastening anchor (400, 401) of the first partial ring segment (210) by at least one first fastening element (421) which penetrates an opening (312, 312', 312") in a first side wall (310, 310', 310") of the connecting element (300, 300', 300"), and the connecting element (300, 300', 300") is connected to the at least one substantially horizontal fastening anchor (400, 401) of the second partial ring segment (220) by at least one second fastening element (422) which penetrates an opening (322, 322', 322") in a second side wall (320, 320', 320") of the connecting element (300, 300', 300").

2. The wind power installation tower section (200) as claimed in the preceding claim,
**characterized in that**, in the region of the joint (230, 240), in particular in the region of the recess, the first and second partial ring segment (210, 220) in each case has at least two opposite, substantially vertical, fastening anchors (410a, 410b, 411a, 411b), wherein, preferably, in the mounting state in the region of the joint (230, 240), the connecting element (300, 300', 300") is connected, preferably releasably, to the at least two substantially vertical fastening anchors (410a, 411a) of the first partial ring segment (210) by at least one first upper and at least one first lower mounting fastening element (431, 433) which respectively penetrate an opening in an upper and a lower transverse wall (330, 330', 330", 340, 340', 340") of the connecting element (300, 300', 300"), and the connecting element (300, 300', 300") is connected, preferably releasably, to the at least two substantially vertical fastening anchors (410b, 411b) of the second partial ring segment (220) by at least one second upper and at least one second lower mounting fastening element (432, 434) which respectively penetrate an opening in an upper and a lower transverse wall (330, 330', 330", 340, 340', 340") of the connecting element (300, 300', 300").

3. The wind power installation tower section (200) as claimed in at least one of the two preceding claims,
**characterized in that** the fastening anchors (400, 401, 410a, 410b, 411a, 411b) are designed as threaded anchors with an internal thread, and/or **characterized in that** the fastening element (421, 422) and/or the mounting fastening element (431, 432, 433, 434) are designed as screws, preferably as hexagon head screws.

4. A wind power installation tower comprising a plurality of wind power installation tower sections (200), which are arranged one above another as intended, as claimed in at least one of the preceding claims, wherein the joints (230, 240) of adjacent tower sections (200) are preferably fitted in a manner offset with respect to one another.

5. A wind power installation (100) comprising a wind power installation tower as claimed in the preceding claim.

6. A method for connecting two partial ring segments (210, 220) to form a wind power installation tower section (200), in particular to form a wind power installation tower section (200) as claimed in at least one of the preceding claims 1-3, comprising:
- arranging a first and a second partial ring segment (210, 220), which are each designed as a casing segment, in such a manner that they butt against each other at at least one substantially vertical joint (230, 240),
- inserting a connecting element in a recess arranged in the region of the joint (230, 240),
- wherein, in the region of the joint (230, 240), in particular in the region of the recess, the first and second partial ring segment (210, 220) each has at least one substantially horizontal fastening anchor (400, 401),
- in the region of the joint (230, 240), fastening the connecting element (300, 300', 300") with the at least one substantially horizontal fastening anchor (400) of the first partial ring segment (210) by at least one first fastening element (421) which penetrates an opening (312, 312', 312") in a first side wall (310, 310', 310") of the connecting element (300, 300', 300"), and fastening the connecting element (300, 300', 300") with the at least one substantially horizontal fastening anchor (401) of the second partial ring segment (220) by at least one second fastening element (422) which penetrates an opening (322, 322', 322") in a second side wall (320, 320', 320") of the connecting element (300, 300', 300").

7. The method as claimed in the preceding claim,
comprising
- fastening, preferably in the mounting state, with respectively opposite surfaces of the recess in the region of the joint (230, 240) of an upper and a lower transverse wall (330, 330', 330", 340, 340', 340") of the connecting element (300, 300', 300").

8. The method as claimed in at least one of the two preceding claims,
**characterized in that**
- in the region of the joint (230, 240), in particular in the region of the recess, the first and second partial ring segment (210, 220) each has at least two opposite, substantially vertical, fastening anchors (410a, 410b, 411a, 411b), and
- fastening, preferably in the mounting state, preferably releasably, in the region of the joint (230, 240) of the connecting element (300, 300', 300") with the at least two substantially vertical fastening anchors (410a, 411a) of the first partial ring segment (210) by at least one first upper and at least one first lower mounting fastening element (431, 433), which mounting fastening elements each penetrate an opening in an upper and a lower transverse wall (330, 330', 330", 340, 340', 340") of the connecting element (300, 300', 300"), and fastening of the connecting element (300, 300', 300"), preferably releasably, with the at least two substantially vertical fastening anchors (410b, 411b) of the second partial ring segment (220) by at least one second upper and at least one second lower mounting fastening element (432, 434), which mounting fastening elements each penetrate an opening in an upper and a lower transverse wall (330, 330', 330", 340, 340', 340") of the connecting element (300, 300', 300").

9. The method as claimed in at least one of the preceding claims 6-8, **characterized in that**, after the fastening of the respective connecting element (300, 300', 300") with the respective horizontal fastening anchor (400, 401) of the first and second partial ring segment (210, 220), the fastening of the respective connecting element (300, 300', 300") with the respective two vertical fastening anchors (410a, 410b, 411a, 411b) of the first and second partial ring segment (210, 220) is released again.

## Revendications

1. Section de tour d'éolienne (200), dans laquelle la section de tour (200) comporte au moins un premier et un second segment annulaire partiel (210, 220), dans laquelle les deux segments annulaires partiels (210, 220) sont réalisés respectivement comme segment d'enveloppe, et de préférence comme corps en béton, et viennent en butée l'un contre l'autre au niveau d'au moins un joint (230, 240) sensiblement vertical, dans laquelle un évidement est agencé dans la zone du joint (230, 240), dans lequel un corps de liaison est inséré, et dans laquelle le premier et le second segment annulaire partiel (210, 220) présentent dans la zone du joint (230, 240), en particulier dans la zone de l'évidement, respectivement au moins une ancre de fixation (400, 401) sensiblement horizontale,
**caractérisée en ce que** dans la zone du joint (230, 240) le corps de liaison (300, 300', 300'') est relié à l'au moins une ancre de fixation (400, 401) sensiblement horizontale du premier segment annulaire partiel (210) par au moins un premier élément de fixation (421) qui traverse une ouverture (312, 312', 312'') dans une première paroi latérale (310, 310', 310'') du corps de liaison (300, 300', 300''), et le corps de liaison (300, 300', 300'') est relié à l'au moins une ancre de fixation (400, 401) sensiblement horizontale du second segment annulaire partiel (220) par au moins un second élément de fixation (422) qui traverse une ouverture (322, 322', 322'') dans une seconde paroi latérale (320, 320', 320'') du corps de liaison (300, 300', 300").

2. Section de tour d'éolienne (200) selon la revendication précédente,
**caractérisée en ce que** le premier et le second segment annulaire partiel (210, 220) présentent dans la zone du joint (230, 240), en particulier dans la zone de l'évidement, respectivement au moins deux ancres de fixation (410a, 410b, 411a, 411b) opposées, sensiblement verticales, dans laquelle de préférence dans l'état de montage dans la zone du joint (230, 240) le corps de liaison (300, 300' 300'') est relié de préférence de manière amovible aux au moins deux ancres de fixation (410a, 411a) sensiblement verticales du premier segment annulaire partiel (210) par au moins un premier élément de fixation de montage supérieur et au moins un premier élément de fixation de montage inférieur (431, 433), qui traversent respectivement une ouverture dans une paroi transversale supérieure et une paroi transversale inférieure (330, 330', 330'', 340, 340', 340") du corps de liaison (300, 300', 300"), et le corps de liaison (300, 300', 300") est relié de préférence de manière amovible aux au moins deux ancres de fixation (410b, 411b) sensiblement verticales du second segment annulaire partiel (220) par au moins un second élément de fixation de montage supérieur et au moins un second élément de fixation de montage inférieur (432, 434) qui traversent respectivement une ouverture dans une paroi transversale supérieure et une paroi transversale inférieure (330, 330', 330'', 340, 340', 340") du corps de liaison (300, 300', 300").

3. Section de tour d'éolienne (200) selon au moins l'une des deux revendications précédentes,
**caractérisée en ce que** les ancres de fixation (400, 401, 410a, 410b, 411a, 411b) sont réalisées comme ancre filetée avec un filet intérieur, et/ou **caractérisée en ce que** l'élément de fixation (421, 422) et/ou l'élément de fixation de montage (431, 432, 433, 434) sont réalisés comme vis, de préférence comme vis hexagonales.

4. Tour d'éolienne comprenant plusieurs sections de tour d'éolienne (200) agencées selon les dispositions les unes aux dessus des autres selon au moins une des revendications précédentes, dans laquelle de préférence les joints (230, 240) de sections de tour (200) contiguës sont placés en déport l'un de l'autre.

5. Eolienne (100) comprenant une tour d'éolienne selon la revendication précédente.

6. Procédé de liaison de deux segments annulaires partiels (210, 220) en une section de tour d'éolienne (200), en particulier en une section de tour d'éolienne (200) selon au moins l'une des revendications précédentes 1 à 3, comprenant :
- l'agencement d'un premier et d'un second segment annulaire partiel (210, 220) réalisés respectivement comme segment d'enveloppe de telle manière qu'ils viennent en butée l'un contre l'autre au niveau d'au moins un joint (230, 240) sensiblement vertical,
- l'insertion d'un corps de liaison dans un évidement agencé dans la zone du joint (230, 240),
- dans lequel le premier et le second segment annulaire partiel (210, 220) présentent dans la zone du joint (230, 240), en particulier dans la zone de l'évidement, respectivement au moins une ancre de fixation (400, 401) sensiblement horizontale,
- dans la zone du joint (230, 240), la fixation du corps de liaison (300, 300', 300'') avec l'au moins une ancre de fixation (400) sensiblement horizontale du premier segment annulaire partiel (210) par au moins un premier élément de fixation (421), qui traverse une ouverture (312, 312', 312'') dans une première paroi latérale (310, 310', 310'') du corps de liaison (300, 300', 300''), et la fixation du corps de liaison (300, 300', 300'') avec l'au moins une ancre de fixation (401) sensiblement horizontale du second segment annulaire partiel (220) par au moins un second élément de fixation (422) qui traverse une ouverture (322, 322', 322'') dans une seconde paroi latérale (320, 320', 320'') du corps de liaison (300, 300', 300'').

7. Procédé selon la revendication précédente, comprenant
- la fixation, de préférence dans l'état de montage, dans la zone du joint (230, 240) d'une paroi transversale supérieure et d'une paroi transversale inférieure (330, 330', 330", 340, 340', 340") du corps de liaison (300, 300', 300") avec des surfaces respectivement opposées de l'évidement.

8. Procédé selon au moins l'une des deux revendications précédentes, **caractérisé en ce que**
- le premier et le second segment annulaire partiel (210, 220) dans la zone du joint (230, 240), en particulier dans la zone de l'évidement, présentent respectivement au moins deux ancres de fixation (410a, 410b, 411a, 411b) opposées, sensiblement verticales, et
- la fixation, de préférence dans l'état de montage, dans la zone du joint (230, 240) du corps de liaison (300, 300', 300'') avec les au moins deux ancres de fixation (410a, 411a) sensiblement verticales du premier segment annulaire partiel (210) par au moins un premier élément de fixation de montage supérieur et au moins un premier élément de fixation de montage inférieur (431, 433), de préférence de manière détachable qui traversent respectivement une ouverture dans une paroi transversale supérieure et une paroi transversale inférieure (330, 330', 330'', 340, 340', 340'') du corps de liaison (300, 300', 300''), et la fixation du corps de liaison (300, 300', 300'') avec les au moins deux ancres de fixation (410b, 411b) sensiblement verticales du second segment annulaire partiel (220) par au moins un second élément de fixation de montage supérieur et au moins un second élément de fixation inférieur (432, 434), de préférence de manière détachable, qui traversent respectivement une ouverture dans une paroi transversale supérieure et une paroi transversale inférieure (330, 330', 330'', 340, 340', 340'') du corps de liaison (300, 300', 300'').

9. Procédé selon au moins l'une des revendications précédentes 6 à 8, **caractérisé en ce qu'**après la fixation du corps de liaison (300, 300', 300'') respectif avec l'ancre de fixation (400, 401) horizontale respective du premier et du second segment annulaire partiel (210, 220) la fixation du corps de liaison (300, 300', 300'') respectif avec les deux ancres de fixation verticales (410a, 410b, 411a, 411b) respectives du premier et du second segment annulaire partiel (210, 220) est de nouveau détachée.
